# EUROPEAN PATENT SPECIFICATION

(11) **EP 4 366 286 B1**
(45) Date of publication and mention of the grant of the patent: **22.04.2026**
(21) Application number: 23833557.4
(22) Date of filing: 30.01.2023
(51) Int. Cl.: H04M 1/60, H04R 5/033

(54) **CALL METHOD AND APPARATUS BASED ON BLUETOOTH EARPHONE, AND STORAGE MEDIUM**
AUF BLUETOOTH-KOPFHÖRER BASIERENDES ANRUFVERFAHREN UND VORRICHTUNG SOWIE SPEICHERMEDIUM
PROCÉDÉ ET APPAREIL D'APPEL BASÉS SUR UN ÉCOUTEUR BLUETOOTH, ET SUPPORT DE STOCKAGE

(30) Priority: 13.09.2022 CN 202211106734
(43) Date of publication of application: 08.05.2024
(73) Proprietor: Honor Device Co., Ltd., Shenzhen, Guangdong 518040 (CN)
(72) Inventor: LI, Yinwei, Shenzhen, Guangdong 518040 (CN); ZHANG, Yong, Shenzhen, Guangdong 518040 (CN); WANG, Fukai, Shenzhen, Guangdong 518040 (CN); HU, Xiaohui, Shenzhen, Guangdong 518040 (CN)
(74) Representative: Epping - Hermann - Fischer
(86) International application number: PCT/CN2023/073835
(87) International publication number: WO 2024/055494

(56) References cited:
- CN-A- 109 890 021
- CN-A- 111 818 503
- CN-A- 112 004 173
- CN-A- 112 399 396
- CN-A- 113 225 719
- CN-A- 114 173 309
- CN-A- 115 190 197
- US-A1- 2008 113 689
- US-A1- 2008 220 825
- US-A1- 2008 220 825
- US-A1- 2023 325 145

## Description

This application claims priority to Chinese Patent Application No. 202211106734.9, filed with the China National Intellectual Property Administration on September 13, 2022 and entitled "BLUETOOTH HEADSET-BASED CALL METHOD AND APPARATUS, AND STORAGE MEDIUM".

### TECHNICAL FIELD

This application relates to the field of terminal technologies, and in particular, to a Bluetooth headset-based call method and apparatus, and a storage medium.

### BACKGROUND

With development of Bluetooth technologies, devices based on the Bluetooth technologies are widely applied to people's daily life. After being connected to an electronic device, a Bluetooth headset may provide services such as playing music and answering a call for a user.

In some implementations, some Bluetooth headsets may provide a function of simultaneously connecting to two or more electronic devices. The user may listen to audio of different electronic devices using a Bluetooth headset supporting dual-connectivity. However, in some scenarios, the Bluetooth headset may disconnect from a voice channel of any one of the electronic devices. As a result, audio of the electronic device is played outward, and use experience of the user is affected. US 2008/220825 A1 relates to relates to a Bluetooth module application, particularly one with multiple audio gateways that allow the user to switch between them freely. The application comprises an audio signal input module-generally a microphone-to send out signals at the device's receiving end; an audio signal output module, to send out the user's audio signals; a Bluetooth module, to transmit or receive Bluetooth signals, with the Bluetooth module having built-in microprocessor or DSP (Digital Signal Processor) to process incoming and outgoing audio signals and to switch between various Audio Gateways or integrate the signals; a key-in module with buttons for users to press commands; and a power supply, to provide required power.

CN 114 173 309 A relates to an audio control method and an audio control system in the field of communication. It provides an audio control system, the system comprising a Bluetooth headset, a first electronic device, and a second electronic device, the Bluetooth headset establishing a first Bluetooth connection with the first electronic device, and establishing a second Bluetooth connection with the second electronic device, the first Bluetooth connection and the second Bluetooth connection supporting media audio stream transmission and call audio stream transmission;

### SUMMARY

Embodiments of this application provide a Bluetooth headset-based call method and apparatus, and a storage medium. One Bluetooth headset may be connected to two devices. When a first device is in a call, and a second device receives an incoming call or initiates an outgoing call, the Bluetooth headset holds playing call audio of the first device and plays a prompt tone of the incoming call or outgoing call of the second device. In this way, the call audio of the first device is not played outward because the Bluetooth headset plays call audio of the second device. The invention is set out in the appended claims.

According to a first aspect, an embodiment of this application provides a Bluetooth headset-based call method, applied to a Bluetooth headset supporting simultaneous connections to a plurality of terminal devices, where the plurality of terminal devices include a first device and a second device, the Bluetooth headset sets up a Bluetooth connection to each of the first device and the second device, and the method includes the following steps.

The Bluetooth headset plays audio of a first call from the first device; the Bluetooth headset holds playing the audio of the first call, and the Bluetooth headset plays an outgoing call prompt tone or incoming call prompt tone of the second device, when the second device initiates a call to a third device or the second device receives a call from the third device; and the Bluetooth headset plays audio of the second call from the second device, and the Bluetooth headset controls the first device to hold or drop the first call, when the second device connects a second call; or the Bluetooth headset continues to play the audio of the first call from the first device when the second device rejects the second call. In this way, when the second device is called or initiates a call, a situation in which the Bluetooth headset immediately plays the audio of the second device and the audio of the first device is played outward does not occur. In addition, when the second device connects the call, the first device holds the call or drops the call, and the Bluetooth headset plays the audio of the second device; or when the second device rejects the call, the Bluetooth headset plays the audio of the first device, and a situation in which the audio of the first device is played outward because of the call of the second device does not occur, thereby improving use experience of a user.

The Bluetooth headset stores the outgoing call prompt tone and the incoming call prompt tone. That the Bluetooth headset plays the audio of the first call, and the Bluetooth headset plays an outgoing call prompt tone or incoming call prompt tone of the second device, when the second device initiates a call to a third device or receives a call from the third device includes: the Bluetooth headset detects a call state of the second device; and the Bluetooth headset mixes the incoming call prompt tone, and the audio of the first call and plays the incoming call prompt tone and the audio of the first call that are mixed, when the call state of the second device is an incoming call state; or the Bluetooth headset mixes the outgoing call prompt tone and the audio of the first call, and plays the outgoing call prompt tone and the audio of the first call that are mixed, when the call state of the second device is an outgoing call state. In this way, the Bluetooth headset plays, according to a call state of the second device, a prompt tone pre-stored in the Bluetooth headset, and does not need to set up the second SCO link to obtain a prompt tone of the second device, thereby reducing scenarios in which the audio of the first call of the first device is played outward and improving call experience of the user.

That the Bluetooth headset plays audio of the second call from the second device when the second device connects a second call, includes: the Bluetooth headset disconnects from a first synchronous connection oriented SCO link to the first device; the Bluetooth headset sets up a second SCO link to the second device; and the Bluetooth headset receives the audio of the second call through the second SCO link and plays the audio of the second call. In this way, when the second device connects the second call, the Bluetooth headset may play the audio of the second call based on the second SCO link.

In a possible implementation, that the Bluetooth headset plays audio of the second call from the second device, and the Bluetooth headset controls the first device to hold or drop the first call, when the second device connects a second call includes: the Bluetooth headset controls the second device to answer the second call, the Bluetooth headset plays the audio of the second call from the second device, and the Bluetooth headset controls the first device to hold the first call, when the Bluetooth headset receives a first operation; or the Bluetooth headset controls the second device to answer the second call, the Bluetooth headset plays the audio of the second call from the second device, and the Bluetooth headset controls the first device to drop the first call, when the Bluetooth headset receives a second operation, where the second operation is different from the first operation. In this way, the user may connect the second call through the Bluetooth headset, and control the first device to hold the first call or drop the first call, thereby simplifying operations of the user and improving use experience of the user.

In a possible implementation, the first operation includes an operation of tapping the Bluetooth headset, the second operation includes an operation of tapping the Bluetooth headset, a tapping count of the first operation is different from a tapping count of the second operation, and/or each of the first operation and the second operation is directed to headsets on two sides of the Bluetooth headset. In this way, the Bluetooth headset may control calls between the first device and the second device based on different operation gestures, thereby improving use experience of the user. In a possible implementation, that the Bluetooth headset continues to play the audio of the first call from the first device when the second device rejects the second call includes: the Bluetooth headset controls the second device to reject the second call, and the Bluetooth headset plays the audio of the first call from the first device, when the Bluetooth headset receives a third operation, where the third operation is different from the first operation and the second operation. In this way, the Bluetooth headset may control the first device to continue the first call and control the second device to drop the second call based on operation gestures, thereby simplifying operations of the user and improving use experience of the user.

In a possible implementation, after that the Bluetooth headset receives the audio of the second call through the second SCO link, the method further includes: the Bluetooth headset disconnects from the second SCO link to the second device when the second device drops the second call; the Bluetooth headset sets up the first SCO link to the first device; and the Bluetooth headset receives the audio of the first call through the first SCO link, and plays the audio of the first call. In this way, the Bluetooth headset may control the first device to hold the first call and control the second device to connect the second call, and after the second device ends the call, the Bluetooth headset resumes the first call of the first device, thereby improving use experience of the user.

In a possible implementation, that the Bluetooth headset plays the audio of the first call from the first device when the second device rejects the second call includes: the Bluetooth headset holds a first SCO link to the first device; and the Bluetooth headset continues to receive the audio of the first call through the first SCO link, and plays the audio of the first call. In this way, when the second device rejects the second call, the Bluetooth headset does not disconnect from the first SCO link, and the first device does not play the audio of the first call outward, thereby improving use experience of user.

According to a second aspect, an embodiment of this application provides a Bluetooth headset. The Bluetooth headset includes a processor, and the processor is configured to call a computer program in a memory to enable the Bluetooth headset to perform the method according to the first aspect.

According to a third aspect, an embodiment of this application provides a computer-readable storage medium. The computer-readable storage medium stores instructions. When the instructions are executed, a computer is enabled to perform the method according to the first aspect. According to a fourth aspect, an embodiment of this application provides a computer program product. When the computer program product is run on a computer, the computer is enabled to perform the method according to the first aspect.

According to a fifth aspect, an embodiment of this application provides a chip. The chip includes a processor, and the processor is configured to call a computer program in a memory to perform the method according to the first aspect.

It should be understood that the second aspect to the fifth aspect of this application correspond to the technical solution of the first aspect of this application, and the beneficial effects obtained by each aspect and the corresponding feasible implementations are similar. Details are not described herein again.

### BRIEF DESCRIPTION OF DRAWINGS

FIG. 1 is a schematic diagram of an architecture of a Bluetooth communication system according to an embodiment of this application;
FIG. 2 is a schematic diagram of a structure of a terminal device 100 according to an embodiment of this application;
FIG. 3 is a schematic diagram of a structure of a Bluetooth headset 200 according to an embodiment of this application;
FIG. 4A is a schematic diagram of an interface of answering a call by a Bluetooth headset in a possible implementation;
FIG. 4B is a schematic diagram of an interface of answering a call by a Bluetooth headset in a possible implementation;
FIG. 5A is a schematic diagram of an interface of a Bluetooth headset-based call method according to an embodiment of this application;
FIG. 5B is a schematic diagram of an interface of a Bluetooth headset-based call method according to an embodiment of this application;
FIG. 5C is a schematic diagram of an interface of a Bluetooth headset-based call method according to an embodiment of this application;
FIG. 6A is a schematic diagram of an interface of another Bluetooth headset-based call method according to an embodiment of this application;
FIG. 6B is a schematic diagram of an interface of another Bluetooth headset-based call method according to an embodiment of this application;
FIG. 6C is a schematic diagram of an interface of another Bluetooth headset-based call method according to an embodiment of this application;
FIG. 7A is a schematic diagram of an interface of still another Bluetooth headset-based call method according to an embodiment of this application;
FIG. 7B is a schematic diagram of an interface of still another Bluetooth headset-based call method according to an embodiment of this application;
FIG. 7C is a schematic diagram of an interface of still another Bluetooth headset-based call method according to an embodiment of this application;
FIG. 8A and FIG. 8B are schematic diagrams of a scenario of a Bluetooth headset-based call method according to an embodiment of this application;
FIG. 9A and FIG. 9B are schematic diagrams of an interface of setting a triggering operation on a Bluetooth headset according to an embodiment of this application;
FIG. 10 is a schematic flowchart of a Bluetooth headset-based call method according to an embodiment of this application;
FIG. 11 is a schematic flowchart of a Bluetooth headset-based call method according to an embodiment of this application;
FIG. 12 is a schematic flowchart of a Bluetooth headset-based call method according to an embodiment of this application;
FIG. 13 is a schematic flowchart of a Bluetooth headset-based call method according to an embodiment of this application; and
FIG. 14 is a schematic diagram of a structure of a Bluetooth headset-based call apparatus according to an embodiment of this application.

### DESCRIPTION OF EMBODIMENTS

For ease of clearly describing the technical solutions of embodiments of this application, some terms and technologies involved in embodiments of this application are briefly introduced below:
(1) Synchronous connection oriented (synchronous connection oriented, SCO) link: It is a communication link between an electronic device and a Bluetooth headset, and supports delay sensitive information, for example, voice. For example, after the electronic device sets up an SCO link to the Bluetooth headset, the electronic device may send voice audio to the Bluetooth headset through the SCO link; and the Bluetooth headset may collect voice audio of a user, and return the voice audio to the electronic device based on the SCO link, and the electronic device sends the voice audio to another device.
(2) Other terms

In embodiments of this application, terms such as "first" and "second" are used in embodiments of this application to distinguish between same items or similar items that have basically the same functions or purposes. For example, a first chip and a second chip are merely used to distinguish different chips, and are not intended to limit a sequence thereof. A person of ordinary skill in the art can understand that the terms, such as "first" and "second", do not define a quantity or an execution sequence, and the terms, such as "first" and "second", do not indicate a definite difference.

It should be noted that the word "example", "for example", or the like in embodiments of this application is used to represent giving an example, an illustration, or a description. Any embodiment or design scheme described as an "exemplary" or "for example" in this application should not be explained as being more preferred or having more advantages than another embodiment or design scheme. Exactly, use of the word "exemplary" or "example" or the like is intended to present a related concept in a specific manner.

In embodiments of this application, "at least one" means one or more, and "a plurality of" means two or more. "And/or" describes an association relationship for describing associated objects and represents that three relationships may exist. For example, A and/or B may represent that: only A exists, both A and B exist, and only B exists, where A and B may be singular or plural. The character "/" in this specification generally indicates an "or" relationship between the associated objects. "At least one of the following" or a similar expression thereof refers to any combination of these items, including one item or any combination of a plurality of items. For example, at least one of a, b, or c may represent a, b, c, "a and b", "a and c", "b and c", or "a, b, and c", where a, b, and c may be singular or plural.

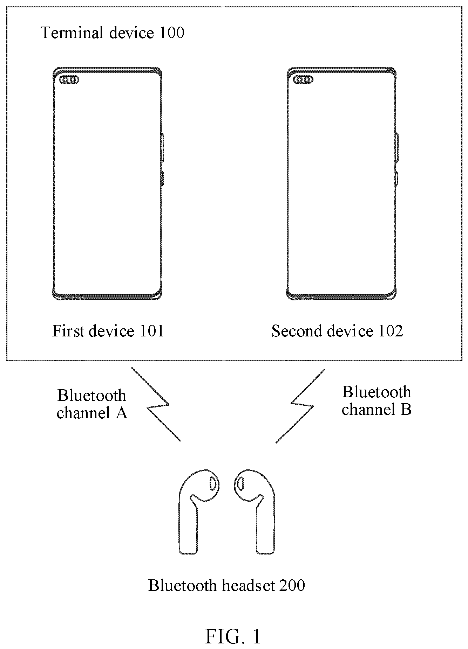

An embodiment of this application provides a Bluetooth headset-based call method. FIG. 1 is a schematic diagram of an architecture of a Bluetooth communication system to which an embodiment of this application is applicable. As shown in FIG. 1:
The Bluetooth communication system includes a terminal device 100 and a Bluetooth headset 200. The terminal device 100 and the Bluetooth headset 200 communicate with each other through a Bluetooth link.

In this embodiment of this application, the terminal device 100 may be a plurality of terminal devices. For example, the terminal device 100 may include a first device 101 and a second device 102. The Bluetooth headset 200 is a headset that may support a Bluetooth communication protocol and that is connected to two or more terminal devices 100. The Bluetooth communication protocol may be a conventional Bluetooth protocol, the conventional Bluetooth protocol is also referred to as a classical Bluetooth protocol, and the Bluetooth communication protocol may alternatively be a Bluetooth low energy (Bluetooth low energy, BLE) protocol. With evolution of Bluetooth protocols, the Bluetooth communication protocol may alternatively be another Bluetooth protocol to be launched in the future. With development of Bluetooth technologies, versions of Bluetooth communication protocols are continuously changing, and the version of the Bluetooth communication protocol of embodiments of this application may be any one of the following versions: 1.0 series version, 2.0 series version, 3.0 series version, or 4.0 series version.

In this embodiment of this application, the Bluetooth headset may include one headset or two headsets. When the Bluetooth headset includes two headsets, the two headsets may communicate with each other using a connecting line, or the two headsets may communicate with each other in a wireless manner. The Bluetooth headset may be a head-mounted headset or an in-ear headset. A specific form of the Bluetooth headset is not limited in embodiments of this application, provided that the Bluetooth headset can support simultaneous connections to a plurality of terminal devices. An applicable scenario of embodiments of this application is described below using an example in which the Bluetooth headset supports simultaneous Bluetooth connections to two terminal devices. For example, the Bluetooth communication system includes a first device 101, a second device 102, and a Bluetooth headset 200. The Bluetooth headset 200 may set up a Bluetooth channel to the first device 101, and the Bluetooth headset 200 may simultaneously set up a Bluetooth channel to the second device 102. In this way, a user may play audio in the first device 101 or the second device 102 through the Bluetooth headset 200; or answer a call of the first device 101 or the second device 102 through the Bluetooth headset 200.

In this embodiment of this application, the terminal device 100 may also be referred to as a terminal (terminal), user equipment (user equipment, UE), a mobile station (mobile station, MS), a mobile terminal (mobile terminal, MT), and the like. The terminal device may be a mobile phone (mobile phone) with a display screen, a smart TV, a wearable device, a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), or the like. Embodiments of this application impose no limitation on a specific technology and a specific device form used by the terminal device.

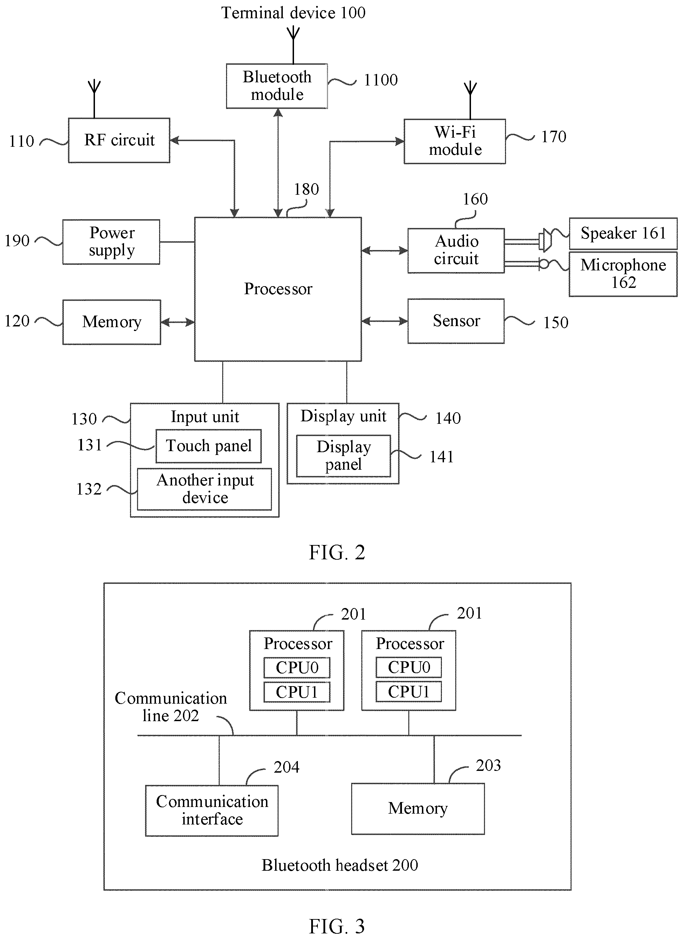

FIG. 2 is a schematic diagram of a structure of a terminal device 100. The terminal device may include components such as a radio frequency (radio frequency, RF) circuit 110, a memory 120, an input unit 130, a display unit 140, a sensor 150, an audio frequency circuit 160, a wireless fidelity (wireless fidelity, Wi-Fi) module 170, a processor 180, a power source 190, and a Bluetooth module 1100. A person skilled in the art may understand that the structure of the terminal device shown in FIG. 2 is not intended to limit the terminal device, and the terminal device may include more components or fewer components than those shown in the figure, or some components may be combined, or a different component deployment may be used.

The following specifically describes the components of the terminal device with reference to FIG. 2.

The RF circuit 110 may be configured to receive and transmit a signal in an information receiving and transmission process or a call process, and in particular, after receiving downlink information of a base station, transmit the downlink information to the processor 180 for processing. In addition, the RF circuit transmits uplink data to the base station. Usually, the RF circuit includes, but is not limited to, an antenna, at least one amplifier, a transceiver, a coupler, a low noise amplifier (low noise amplifier, LNA), a duplexer, and the like. In addition, the RF circuit 110 may also communicate with a network and another device through wireless communication. The wireless communication may use any communication standard or protocol, including, but not limited to, Global System for Mobile Communication (global system of mobile communication, GSM), General Packet Radio Service (general packet radio service, GPRS), Code Division Multiple Access (code division multiple access, CDMA), Wideband Code Division Multiple Access (wideband code division multiple access, WCDMA), Long Term Evolution (long term evolution, LTE), email, Short Messaging Service (short messaging service, SMS), and the like.

The memory 120 may be configured to store a software program and a module, and the processor 180 runs the software program and the module that are stored in the memory 120, to perform various functional applications and data processing of the terminal device. The memory 120 may mainly include a program storage area and a data storage area. The program storage area may store an operating system, an application program required by at least one function (for example, a sound playback function and an image display function), a boot loader (boot loader), and the like. The data storage area may store data (for example, audio data and a phone book) created according to use of the terminal device. In addition, the memory 120 may include a high-speed random access memory, and may further include a non-volatile memory, for example, at least one magnetic disk storage device, a flash memory device, or another volatile solid-state storage device. It may be understood that in this embodiment of this application, the memory 120 stores a program connected to a Bluetooth device.

The input unit 130 may be configured to: receive input digit or character information, and generate a keyboard signal input related to a user setting and function control of the terminal device. Specifically, the input unit 130 may include a touch panel 131 and another input device 132. The touch panel 131 is also referred to as a touchscreen, may collect a touch operation that is performed by a user on or near the touch panel 131 (for example, an operation that is performed by a user by using any appropriate object or accessory such as a finger or a stylus on or near the touch panel 131), and drive a corresponding connection apparatus according to a preset program. Optionally, the touch panel 131 may include two parts: a touch detection apparatus and a touch controller. The touch detection apparatus detects a touch orientation of the user, detects a signal brought through the touch operation, and transmits the signal to the touch controller. The touch controller receives touch information from the touch detection apparatus, converts the touch information into a contact coordinate, then transmits the contact coordinate to the processor 180, receives and executes a command transmitted by the processor 180. In addition, the touch panel 131 may be implemented by using various types, such as a resistive type, a capacitive type, an infrared type, and a surface acoustic wave type. In addition to the touch panel 131, the input unit 130 may further include the another input device 132. Specifically, the another input device 132 may include but is not limited to one or more of a physical keyboard, a function button (such as a volume control button or an on/off button), a trackball, a mouse, a joystick, and the like.

The display unit 140 may be configured to display information entered by the user or information provided to the user, and various menus of the terminal device. The display unit 140 may include a display panel 141. Optionally, the display panel 141 may be configured by using a liquid crystal display (liquid crystal display, LCD), an organic light-emitting diode (organic light-emitting diode, OLED), or the like. Further, the touch panel 131 can cover display panel 141. When detecting a touch operation on or near the touch panel 131, the touch panel 131 transmits the touch operation to the processor 180 to determine a type of a touch event. Then, the processor 180 provides corresponding visual output on the display panel 141 based on the type of the touch event. Although in FIG. 2, the touch panel 131 and the display panel 141 are used as two separate parts to implement input and output functions of the terminal device, in some embodiments, the touch panel 131 and the display panel 141 may be integrated to implement the input and output functions of the terminal device.

The terminal device may further include at least one sensor 150 such as a light sensor, a motion sensor, and another sensor. Specifically, the optical sensor may include an ambient light sensor and a proximity sensor. The ambient light sensor may adjust luminance of the display panel 141 according to brightness of the ambient light. The proximity sensor may switch off the display panel 141 or backlight when the terminal device is moved to the ear. As one type of motion sensor, an acceleration sensor may detect magnitude of accelerations in various directions (generally, triaxial), can detect magnitude and a direction of the gravity when the terminal device is static, and may be applied to an application that recognizes a gesture of a mobile phone (for example, switching between landscape orientation and portrait orientation, a related game, and magnetometer gesture calibration), and functions related to vibration recognition (such as a pedometer and tapping), and the like. As for other sensors such as a gyroscope, a barometer, a hygrometer, a thermometer, and an infrared sensor that may be further configured for the terminal device, details are not described herein.

The audio frequency circuit 160, a speaker 161, and a microphone 162 may provide audio interfaces between the user and the terminal device. The audio circuit 160 may convert received audio data into an electrical signal and transmit the electrical signal to the speaker 161. The speaker 161 converts the electrical signal into a sound signal and outputs the sound signal. In addition, the microphone 162 converts a collected sound signal into an electrical signal. After receiving the electrical signal, the audio circuit 160 converts the electrical signal into audio data, and then outputs the audio data. After processed by the processor 180, the audio data is transmitted through the RF circuit 110 to, for example, another terminal device or the audio data is outputted to the memory 120 for further processing.

Wi-Fi belongs to a short distance wireless transmission technology. The terminal device may help, by using the Wi-Fi module 170, a user to receive and send an email, browse a web page, access stream media, and the like. This provides wireless broadband Internet access for the user. Although FIG. 2 shows the Wi-Fi module 170, it may be understood that, the Wi-Fi module is not a necessary component of the terminal device, and may be omitted according to demands without changing the scope of the essence of the present disclosure.

The processor 180 is a control center of the terminal device, and connects to various parts of the terminal device using various interfaces and lines. By running or executing the software program or module stored in the memory 120, and invoking data stored in the memory 120, the processor 180 performs various functions and data processing of the terminal device, thereby performing overall monitoring on the terminal device. Optionally, the processor 180 may include one or more processing units. Preferably, the processor 180 may integrate an application processor and a modem processor. The application processor mainly processes an operating system, a user interface, an application program, and the like. The modem processor mainly processes wireless communication. It may be understood that the foregoing modem processor may not be integrated into the processor 180.

The terminal device further includes the power supply 190 (such as a battery) for supplying power to the components. Preferably, the power supply may be logically connected to the processor 180 using a power supply management system, thereby implementing functions, such as charging, discharging, and power consumption management, using the power supply management system. The Bluetooth technology is a short-distance wireless transmission technology, and the terminal device may set up a Bluetooth connection to another terminal device with a Bluetooth module through the Bluetooth module 1100, thereby performing data transmission based on a Bluetooth communication link. The Bluetooth module 1100 may be a Bluetooth low energy (bluetooth low energy, BLE) or module according to an actual requirement.

For example, in this embodiment of this application, the terminal device 100 may set up a Bluetooth channel to the Bluetooth headset 200 through the Bluetooth module 1100, and send call voice data to the Bluetooth headset 200 and receive call voice data from the Bluetooth headset 200 through the Bluetooth module 1100.

Although not shown in the figure, the terminal device may further include a camera. Optionally, the camera may be a front-facing camera, a rear-facing camera, or a built-in camera (which may be stretched out from the body of the terminal device during use) on the terminal device. This is not limited in this embodiment of this application.

Optionally, the terminal device may include a single camera, a dual camera, a triple camera, or the like. This is not limited in this embodiment of this application. The camera includes, but is not limited to, a wide-angle camera, a telephoto camera, or a depth camera.

For example, the terminal device may include a triple camera, which include one main camera, one wide-angle camera, and one telephoto camera.

Optionally, when the terminal device includes a plurality of cameras, the plurality of cameras may be completely front-facing cameras, completely rear-facing cameras, completely built-in cameras, at least some front-facing cameras, at least some rear-facing cameras, or at least some built-in cameras. This is not limited in this embodiment of this application.

A structure of the Bluetooth headset 200 of this embodiment of this application is described below. FIG. 3 is a schematic diagram of a structure of a Bluetooth headset 200 according to an embodiment of this application. The Bluetooth headset 200 shown in FIG. 3 may include at least one processor 201, a communication line 202, a memory 203, and at least one communication interface 204.

The processor 201 may be a general-purpose central processing unit (central processing unit, CPU), a microprocessor, an application-specific integrated circuit (application-specific integrated circuit, ASIC), or one or more integrated circuits configured to control execution of a program in the solutions of this application.

The communication line 202 may include at least one channel, such as a data bus and/or a control bus, configured to transmit information between the foregoing components (such as the at least one processor 201, the communication line 202, the memory 203, and the at least one communication interface 204).

The communication interface 204 is configured to communicate with another device or a communication network such as a wide area network (wide area network, WAN) or a local area network (local area networks, LAN) by using any apparatus in a type of a transceiver. The communication interface 204 includes a Bluetooth module.

The memory 203 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM) or a compact disc read-only memory (compact disc read-only memory, CD-ROM) or another compact disc storage, optical disc storage (including compressed optical discs, laser discs, optical discs, digital versatile optical discs, and Blu-ray discs), magnetic disk storage media, or another magnetic storage device, or any another medium that can be used to carry or store desired program code in the form of an instruction or a data structure and that can be accessed by a computer, but not limited thereto. The memory 203 may exist independently, and is connected to the processor 201 through the communication line 202. The memory 203 may alternatively be integrated with the processor 201. The memory 203 provided in this embodiment of this application usually includes a non-volatile memory. The memory 203 is configured to store computer instructions for performing the solutions in this application, and the processor 201 controls execution. The processor 201 is configured to execute the computer instructions stored in the memory 203, to implement a method provided in the following embodiments of this application. For example, the memory 203 stores computer instructions used for making a call based on the Bluetooth headset.

Optionally, the computer instructions in this embodiment of this application may also be referred to as application program code or a system. This is not specifically limited in this embodiment of this application. In this embodiment of this application, an example in which the terminal device is a mobile phone is described. The example does not constitute a limitation on embodiments of this application.

In this embodiment of this application, the Bluetooth headset may set up a Bluetooth channel to a first device, and the Bluetooth headset may simultaneously set up a Bluetooth channel to a second device. In some embodiments, a "Bluetooth" function may be enabled in a setting interface of the first device to enter a Bluetooth setting interface, and when receiving a triggering operation directed to a Bluetooth device in the Bluetooth setting interface, the first device may set up a Bluetooth channel to the Bluetooth headset. The second device may also set up a Bluetooth channel to the Bluetooth headset according to the foregoing method. It may be understood that in the Bluetooth headset-based call method provided in this embodiment of this application, an interaction process of the Bluetooth headset and each of the first device and the second device is performed on the basis that the Bluetooth headset simultaneously sets up Bluetooth channels to the two terminal devices.

After the terminal device is in a Bluetooth connection to the Bluetooth headset, the terminal device may set up an asynchronous connection less (asynchronous connection less, ACL) link and an SCO link to the Bluetooth headset. The ACL link is used for packet data transmission. For example, the first device or the second device may send audio data to the Bluetooth headset based on the ALC link, and the audio data may be music played in the terminal device. The SCO link is used for transmitting data communication having a high time requirement. For example, the first device or the second device may send call audio data to the Bluetooth headset based on the SCO link, and the Bluetooth headset may also send call audio data to the first device or the second device based on the SCO link.

In some implementations, some Bluetooth headsets may provide a function of simultaneously connecting to two or more electronic devices. The user may listen to audio of different electronic devices using a Bluetooth headset supporting dual-connectivity. However, in some scenarios, the Bluetooth headset may disconnect from a voice channel of any one of the electronic devices. As a result, audio of the electronic device is played outward. For example, the Bluetooth headset is simultaneously connected to the first device and the second device. When the first device makes a call based on the Bluetooth headset, the Bluetooth headset may play and collect voice of the first device. In this case, the second device receives the call or initiates a call, and when the second device initiates the call unsuccessfully, does not answer to respond to the call, or initiates the call successfully, the Bluetooth headset disconnects from a voice channel to the first device, and sets up a voice channel to the second device. Call voice of the first device is played outward, and use experience of the user is affected.

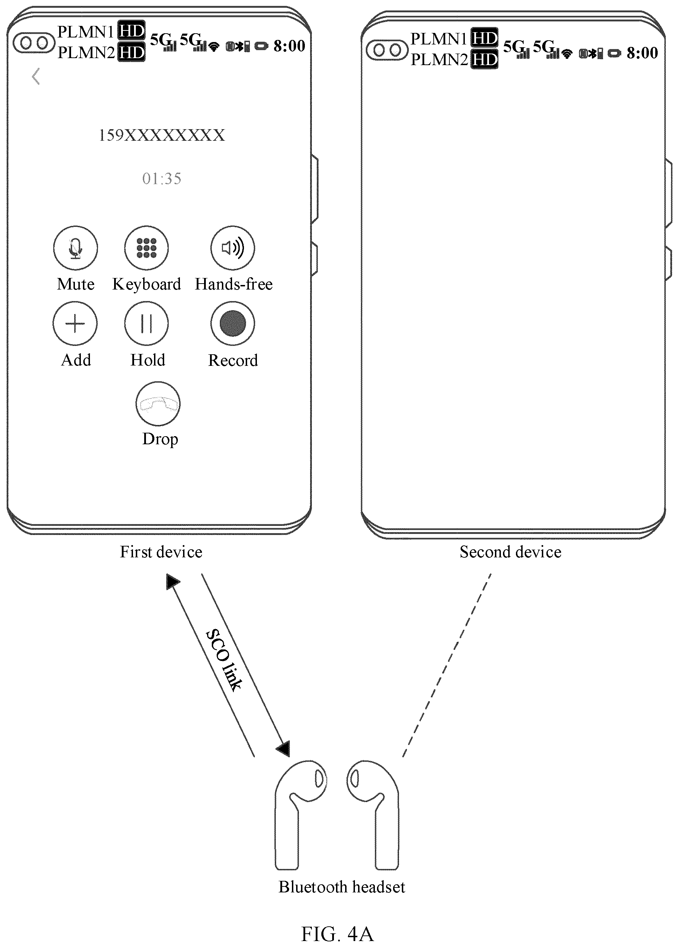

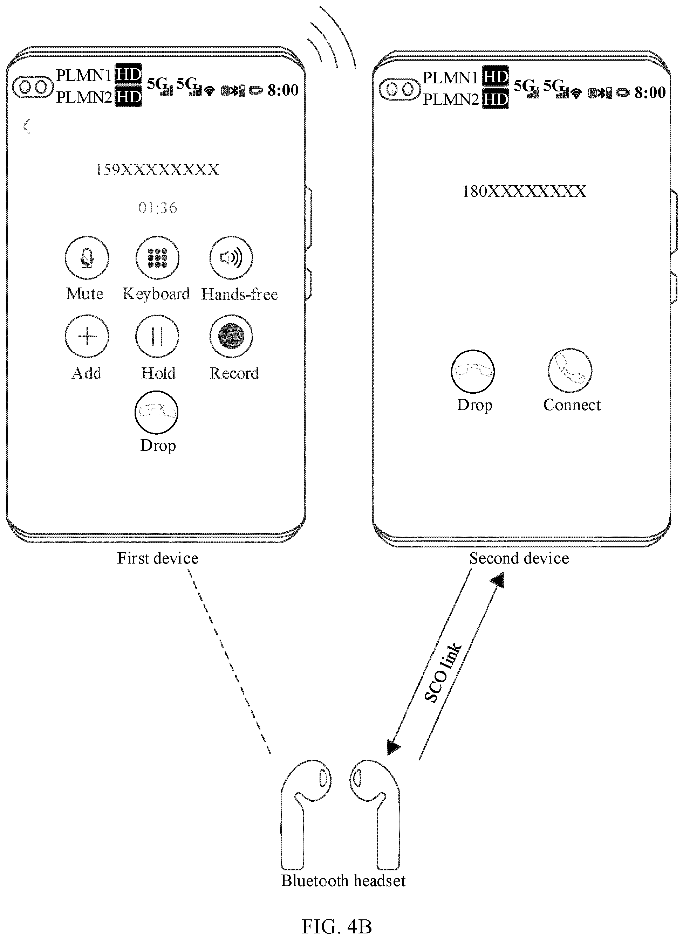

For example, scenarios that may exist when a terminal device uses a Bluetooth headset to connect a voice call in a possible implementation are described below with reference to FIG. 4A and FIG. 4B.

As shown in FIG. 4A, a Bluetooth headset sets up a Bluetooth channel to each of a first device and a second device, where the first device is connecting a call whose mobile number is 159XXXXXXXX, and the Bluetooth headset may play call audio of the first device. It may be understood that when the Bluetooth headset plays the call audio of the first device, users other than a user wearing the Bluetooth headset cannot hear a voice call of the first device.

As shown in FIG. 4B, a second device receives an incoming call whose mobile number is 180XXXXXXXX, a Bluetooth headset sets up an SCO link to the second device, and the Bluetooth headset may play an incoming call prompt tone from the second device based on the SCO link. In this case, because the Bluetooth headset cannot simultaneously set up an SCO link to two terminal devices in the Bluetooth communication protocol, the Bluetooth headset cannot set up an SCO link to a first device. The SCO link between the first device and the Bluetooth headset is interrupted, and the call audio of the first device cannot be sent to the Bluetooth headset. As a result, the first device plays the call audio outward, and call experience of the user is affected.

It may be understood that when the second device receives a call or is called, regardless of whether the second device answers the call or drops the call, call audio of the first device is played outward. In view of this, an embodiment of this application provides a Bluetooth headset-based call method, where a Bluetooth headset plays audio of a first call from a first device; when the second device initiates a call to a third device or the second device receives a call from the third device, the Bluetooth headset holds playing the audio of the first call, and the Bluetooth headset plays an outgoing call prompt tone or incoming call prompt tone of the second device; and when the second device connects a second call, the Bluetooth headset plays audio of the second call from the second device, and the Bluetooth headset controls the first device to hold or drop the first call; or when the second device rejects the second call, the Bluetooth headset continues to play the audio of the first call from the first device. In this way, when the second device is called or initiates a call, a situation in which the Bluetooth headset immediately plays the audio of the second device and the audio of the first device is played outward does not occur. In addition, when the second device connects the call, the first device holds the call or drops the call, and the Bluetooth headset plays the audio of the second device; or when the second device rejects the call, the Bluetooth headset plays the audio of the first device, and a situation in which the audio of the first device is played outward because of the call of the second device does not occur, thereby improving use experience of a user.

The following describes the technical solutions of this application and how to resolve the foregoing technical problems according to the technical solutions of this application in detail by using specific embodiments. The following several specific embodiments may be independently implemented, and may also be combined with each other, and the same or similar concepts or processes may not be described repeatedly in some embodiments.

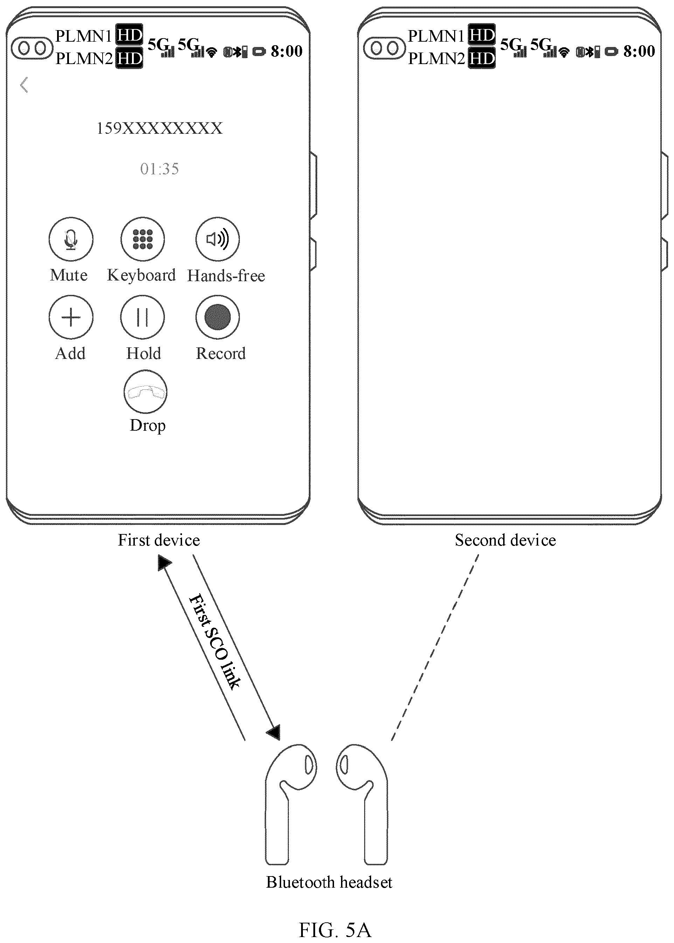

For example, use scenarios of a Bluetooth headset-based call method provided in an embodiment of this application are described below with reference to FIG. 5A to FIG. 5C. FIG. 5A to FIG. 5C are schematic diagrams of interfaces of a Bluetooth headset-based call method according to an embodiment of this application.

As shown in FIG. 5A, a Bluetooth headset sets up a Bluetooth connection to each of a first device and a second device, where the first device is executing a first call (for example, the first device makes a call to a device whose mobile number is 159XXXXXXXX), and the second device does not execute any call service. The Bluetooth headset may receive audio of the first call of the first device based on a first SCO link. The Bluetooth headset may further collect voice audio of a user, and send the voice audio of the user to the first device based on the first SCO link. The first device sends the voice audio of the user to device to which the first device sets up a voice call.

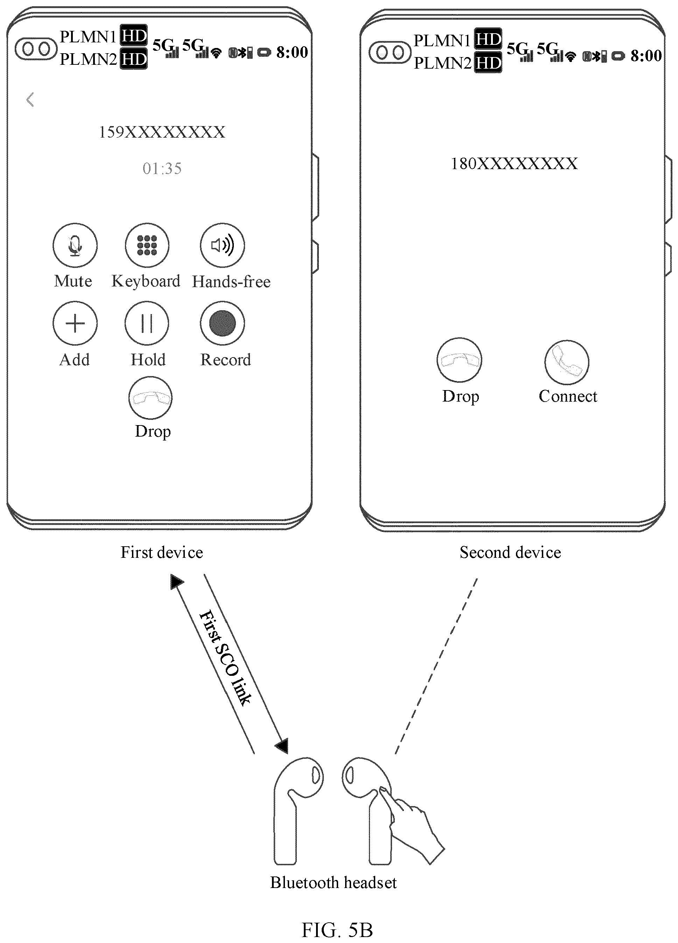

It may be understood that in the scenario shown in FIG. 5A, the first device is executing the first call, and the second device does not execute any voice call service. After the Bluetooth headset sets up the first SCO link to the first device, the user may hear the audio of the first call of the first device based on the Bluetooth headset, but other users cannot learn content of the first call at this moment. In this embodiment of this application, the second device may execute other non-call services or be in a standby state. This is not limited in this embodiment of this application. When the first device is executing the first call, the second device may initiate a call to a third device or the second device receives a call from the third device, a terminal device in embodiments of this application may execute a procedure shown in FIG. 5B. For example, the Bluetooth headset-based call method provided in this embodiment of this application is described using an example in which the first call is a call that the first device makes with a device whose mobile number is 159XXXXXXXX and the second call is a call received by the second device from the third device whose mobile number is 180XXXXXXXX.

As shown in FIG. 5B, the first device is executing the first call, and the second device receives a call from the third device. In this case, the Bluetooth headset may play audio of the first call from the first device, and the Bluetooth headset may simultaneously play an incoming call prompt tone (the incoming call prompt tone may be incoming call music, an incoming call ringtone, or the like, and may be customized) of the second device. In other words, the user with the Bluetooth headset may simultaneously hear sound of speaking of the user of 159XXXXXXXX, and may also hear the incoming call prompt tone.

It may be understood that when the second device receives the call of the third device, the Bluetooth headset does not immediately execute actions of disconnecting from a first SCO link and setting up a second SCO link, the Bluetooth headset may simultaneously play the call audio of the first device and the incoming call prompt tone of the second device, and a user without the Bluetooth headset cannot hear the audio of the first call of the first device, and cannot hear the incoming call prompt tone of the second device either.

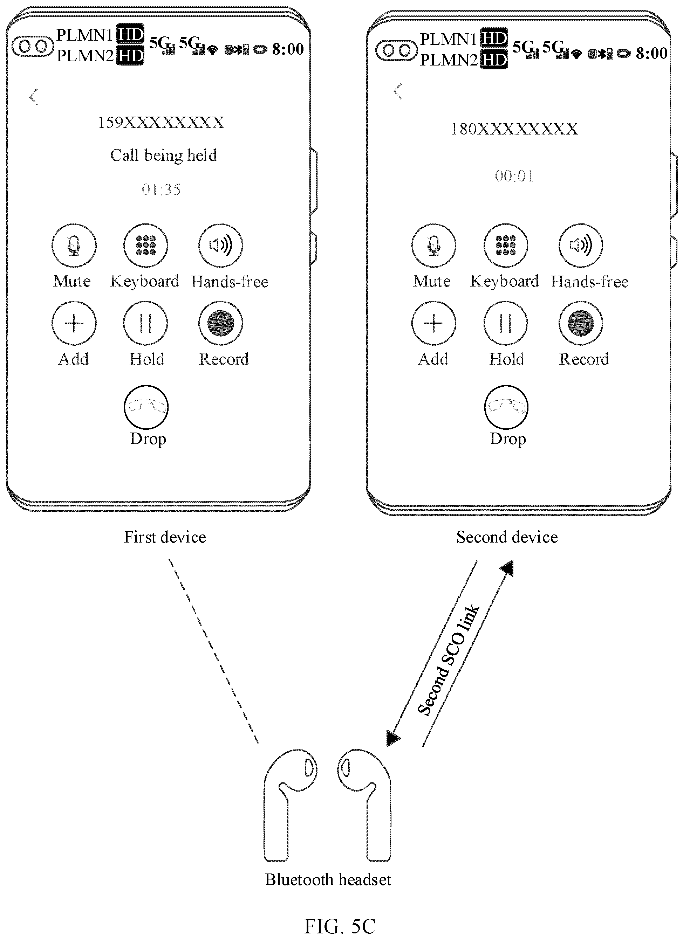

In the interface of FIG. 5B, the Bluetooth headset receives a triggering operation used for holding the first call and answering the second call. In response to the triggering operation used for holding the first call and answering the second call, the Bluetooth headset controls the first device to hold the first call, and the Bluetooth headset controls the second device to answer the second call, as shown in FIG. 5C. In FIG. 5C, the call between the first device and the device whose mobile number is 159XXXXXXXX is held, and the call between the second device and the third device whose mobile number is 180XXXXXXXX is answered. In this case, the Bluetooth headset may play the audio of the second call of the second device, and the Bluetooth headset cannot play the audio of the first call of the first device.

It may be understood that the triggering operation used for holding the first call and answering the second call may be a preset operation. For example, a gesture may be set based on a terminal device in this embodiment of this application, the terminal device may set the triggering operation used for holding the first call and answering the second call to an operation of tapping the Bluetooth headset, and the preset operation is described subsequently in this embodiment of this application.

A call being held may be understood as a call being in a state of being connected and suspended, and the first device does not terminate the first call and cannot receive call audio of the other party. After the first device cancel call holding, the first device may resume the call to the other party, and receive the call audio of the other party. In the scenario of FIG. 5C, the Bluetooth headset disconnects from the first SCO link and sets up the second SCO link, and the Bluetooth headset may receive the audio of the second call of the second device based on the second SCO link. The user with the Bluetooth headset may hear the call audio of the second device, but the user without the Bluetooth headset can hear neither the call audio of the first device nor the call audio of the second device.

It should be noted that, neither a Bluetooth channel between the first device and the Bluetooth headset nor are Bluetooth channel between the second device and the Bluetooth headset is shown in FIG. 5A, FIG. 5B, and FIG. 5C, but it may be understood that in the interaction scenario of the terminal device and the Bluetooth headset of this embodiment of this application, the terminal device always sets up a Bluetooth channel to the Bluetooth headset, setup and interruption of an ACL link and setup and interruption of an SCO link do not affect the Bluetooth channel, and the Bluetooth channel between the terminal device and the Bluetooth headset is omitted in subsequent embodiments, and is not described again.

In the Bluetooth headset-based call method provided in this embodiment of this application, when the first device is executing a voice call and the second device receives an incoming call or makes an outgoing call, the Bluetooth headset separately controls the first device to hold the voice call and controls the second device to answer the voice call. In this way, in a scenario in which the second device makes a call and is called, a situation in which the Bluetooth headset immediately disconnects from the first SCO link and therefore the call audio of the first device is played outward does not occur. In addition, when the Bluetooth headset and the first device disconnect from the first SCO link subsequently, the call of the first device is in a held state, and a situation in which the call audio of the first device is played outward does not occur, thereby improving use experience of the user.

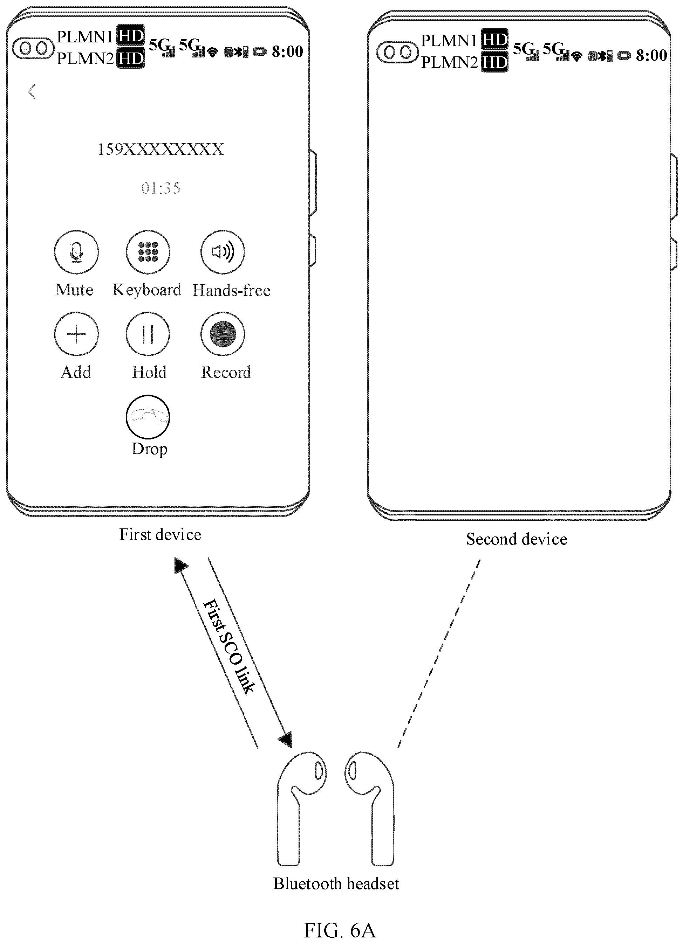

For example, use scenarios of another Bluetooth headset-based call method provided in an embodiment of this application are described below with reference to FIG. 6A to FIG. 6C. FIG. 6A to FIG. 6C are schematic diagrams of interfaces of a Bluetooth headset-based call method according to an embodiment of this application.

As shown in FIG. 6A, a Bluetooth headset sets up a Bluetooth connection to each of a first device and a second device, where the first device is executing a first call (for example, the first device makes a call to a device whose mobile number is 159XXXXXXXX), and the second device does not execute any call service. The Bluetooth headset may receive audio of the first call of the first device based on a first SCO link, and play the audio of the first call.

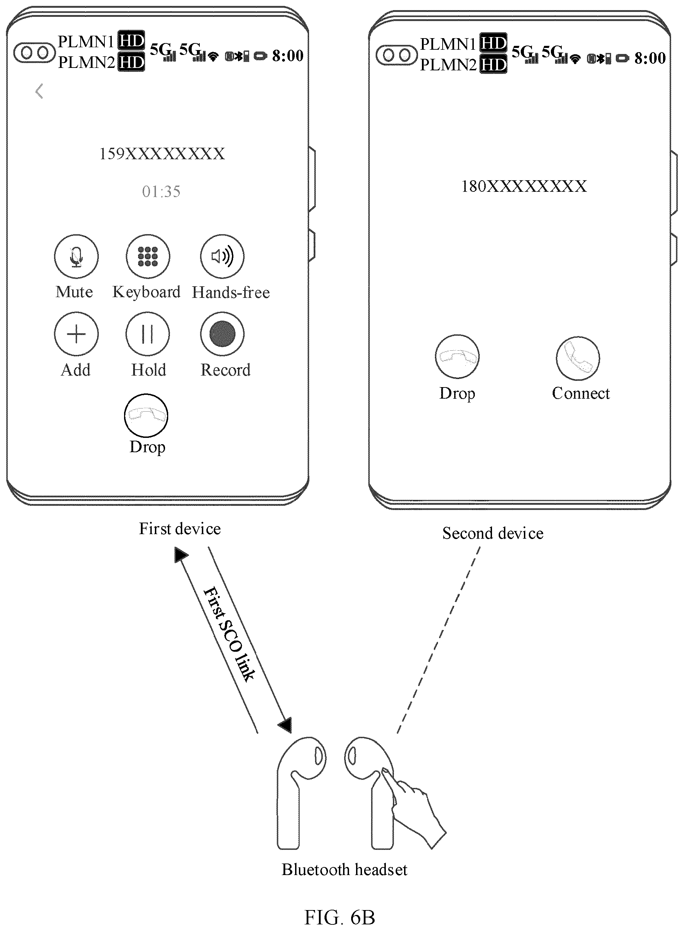

When the second device receives a call of a third device, a terminal device may enter a scenario shown in FIG. 6B. As shown in FIG. 6B, the first device is executing the first call, and the second device receives a call from the third device. In this case, the Bluetooth headset may play audio of the first call from the first device, and the Bluetooth headset may simultaneously play an incoming call prompt tone of the second device.

It should be noted that, for a process in which the terminal device enters interfaces shown in FIG. 6A and FIG. 6B, reference may be made to adaptive descriptions of content of interfaces shown in FIG. 5A and FIG. 5B. Details are not described herein again.

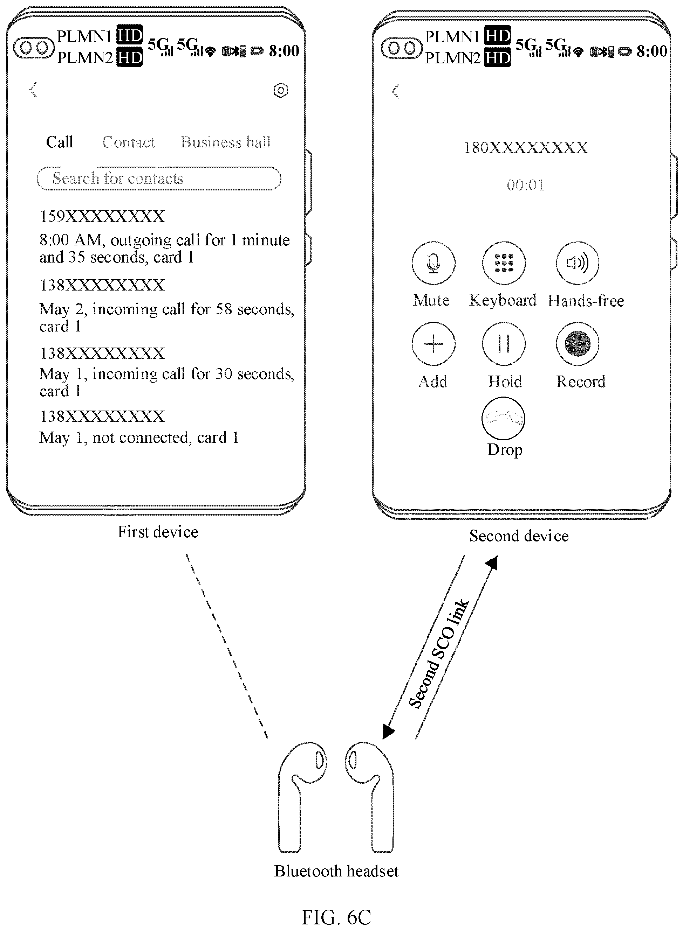

In the interface of FIG. 6B, the Bluetooth headset receives a triggering operation used for dropping the first call and answering the second call. In response to the triggering operation used for dropping the first call and answering the second call, the Bluetooth headset controls the first device to drop the first call, and the Bluetooth headset controls the second device to answer the second call, as shown in FIG. 6C. In FIG. 6C, the call between the first device and the device whose mobile number is 159XXXXXXXX is dropped, and the call between the second device and the third device whose mobile number is 180XXXXXXXX is answered. In this case, the Bluetooth headset may play the audio of the second call of the second device, and the Bluetooth headset cannot play the audio of the first call of the first device.

It may be understood that the triggering operation used for dropping the first call and answering the second call may be a preset operation. For example, a gesture may be set based on the terminal device in this embodiment of this application, the terminal device may set the triggering operation used for dropping the first call and answering the second call to an operation of tapping the Bluetooth headset, and the preset operation is described subsequently in this embodiment of this application.

In the scenario of FIG. 6C, the Bluetooth headset disconnects from the first SCO link and sets up the second SCO link, and the Bluetooth headset may receive the audio of the second call of the second device based on the second SCO link. The user with the Bluetooth headset may hear the call audio of the second device, but the user without the Bluetooth headset can hear neither the call audio of the first device nor the call audio of the second device.

In the Bluetooth headset-based call method provided in this embodiment of this application, when the first device is executing a voice call and the second device receives an incoming call or makes an outgoing call, the Bluetooth headset separately controls the first device to drop the voice call and controls the second device to answer the voice call. In this way, in a scenario in which the second device makes a call and is called, a situation in which the Bluetooth headset immediately disconnects from the first SCO link and therefore the call audio of the first device is played outward does not occur, thereby improving use experience of the user. In addition, when the Bluetooth headset and the first device disconnect from the first SCO link subsequently, the call of the first device is in a dropped state, and a situation in which the call audio of the first device is played outward does not occur either, thereby improving use experience of the user.

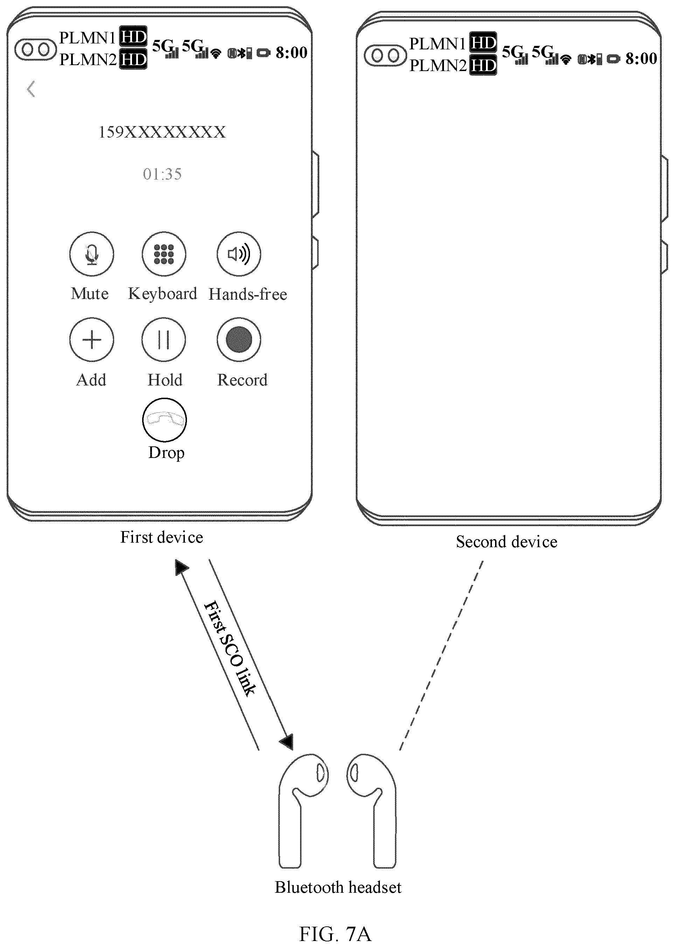

For example, use scenarios of still another Bluetooth headset-based call method provided in an embodiment of this application are described below with reference to FIG. 7A to FIG. 7C. FIG. 7A to FIG. 7C are schematic diagrams of interfaces of a Bluetooth headset-based call method according to an embodiment of this application.

As shown in FIG. 7A, a Bluetooth headset sets up a Bluetooth connection to each of a first device and a second device, where the first device is executing a first call (for example, the first device makes a call to a device whose mobile number is 159XXXXXXXX), and the second device does not execute any call service. The Bluetooth headset may receive audio of the first call of the first device based on a first SCO link, and play the audio of the first call.

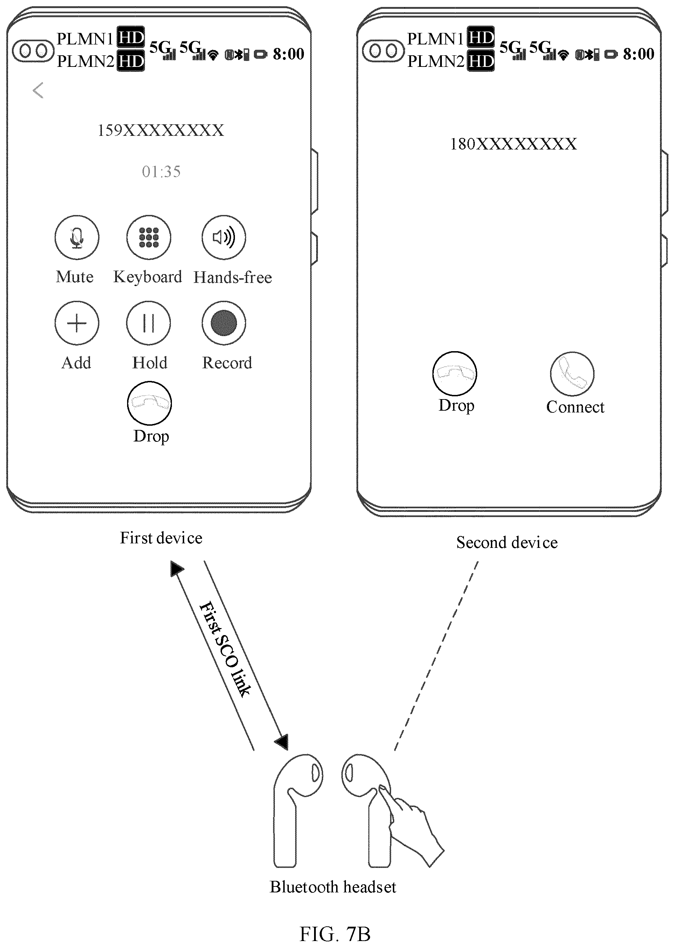

When the second device receives a call of a third device, a terminal device may enter a scenario shown in FIG. 7B. As shown in FIG. 7B, the first device is executing the first call, and the second device receives a call from the third device. In this case, the Bluetooth headset may play audio of the first call from the first device, and the Bluetooth headset may simultaneously play an incoming call prompt tone of the second device.

It should be noted that, for a process in which the terminal device enters interfaces shown in FIG. 7A and FIG. 7B, reference may be made to adaptive descriptions of content of interfaces shown in FIG. 5A and FIG. 5B. Details are not described herein again.

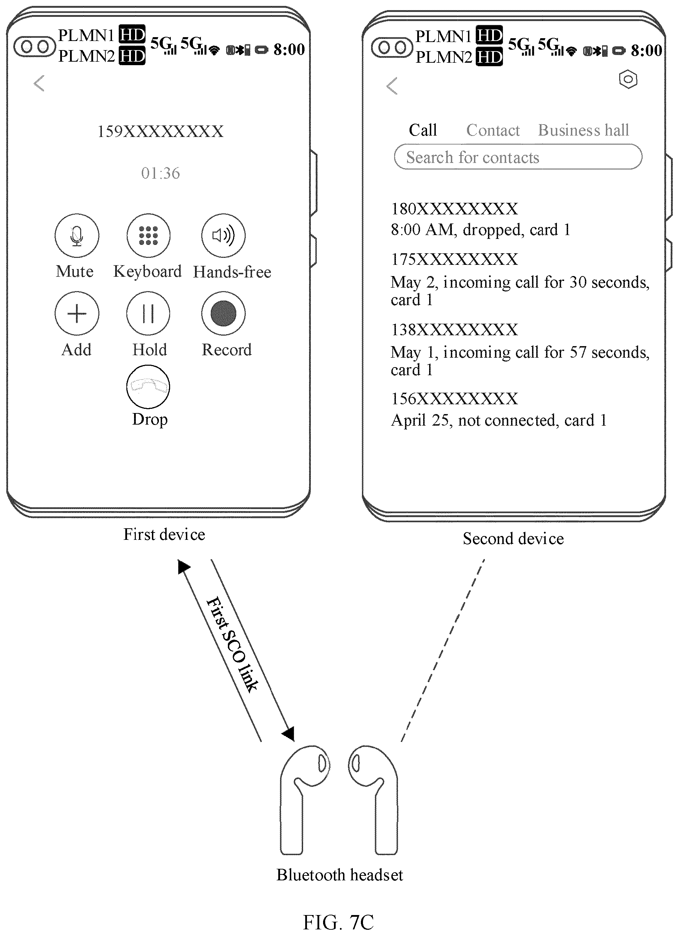

In the interface shown in FIG. 7B, the Bluetooth headset receives a triggering operation used for rejecting the second call. In response to the triggering operation used for rejecting the second call, the Bluetooth headset controls the first device to continue to execute the first call, and the Bluetooth headset controls the second device to reject the second call, as shown in FIG. 7C. In FIG. 7C, the first device continues to make a call to the device whose mobile number is 159XXXXXXXX, and the call between the second device and the third device whose mobile number is 180XXXXXXXX is dropped. In this case, the Bluetooth headset may continue to play the audio of the first call of the first device.

It may be understood that the triggering operation used for rejecting the second call may be a preset operation. For example, a gesture may be set based on the terminal device in this embodiment of this application, the terminal device may set the triggering operation used for rejecting the second call to an operation of tapping the Bluetooth headset, and the preset operation is described subsequently in this embodiment of this application.

In the scenario of FIG. 7C, the Bluetooth headset holds a connection relationship with the first SCO link, and the Bluetooth headset may continue to receive the audio of the first call of the first device based on the first SCO link. The user with the Bluetooth headset may hear the call audio of the first device, but the user without the Bluetooth headset can hear neither the call audio of the first device nor the call audio of the second device. Holding in the step that the Bluetooth headset holds the connection relationship with the first SCO link may be understood as that the Bluetooth headset does not disconnect from the first SCO link and the first SCO link always exists between the Bluetooth headset and the first device, and the meaning of this holding is different from that of the call holding. This is not described again subsequently in embodiments of this application. In the Bluetooth headset-based call method provided in this embodiment of this application, when the first device is executing a voice call and the second device receives an incoming call or makes an outgoing call, the Bluetooth headset separately controls the first device to continue to execute the voice call and controls the second device to reject the voice call. In this way, in a scenario in which the second device makes a call and is called, a situation in which the Bluetooth headset immediately disconnects from the first SCO link and therefore the call audio of the first device is played outward does not occur.

In this embodiment of this application, a scenario in which the second device initiates a call to the third device is similar to scenarios of FIG. 5A to FIG. 7C, and when the second device initiates a call to the third device, the Bluetooth headset may play audio of the first call of the first device and play an outgoing call prompt tone (the outgoing call prompt tone may be a prompt tone that a user of the second device may hear when a user of the third device does not answer the call, for example, outgoing call music or an outgoing call ringtone, and may be customized) of the second device. The scenario in which the second device initiates a call to the third device is not described again in embodiments of this application.

In this embodiment of this application, for example, a terminal device that is executing a voice call is defined as the first device, and a terminal device that initiates a call or receives a call is defined as the second device. The first device may alternatively be a terminal device that initiates a call or receives a call, and the second device may alternatively be a terminal device that is executing a voice call. This is not limited in this embodiment of this application.

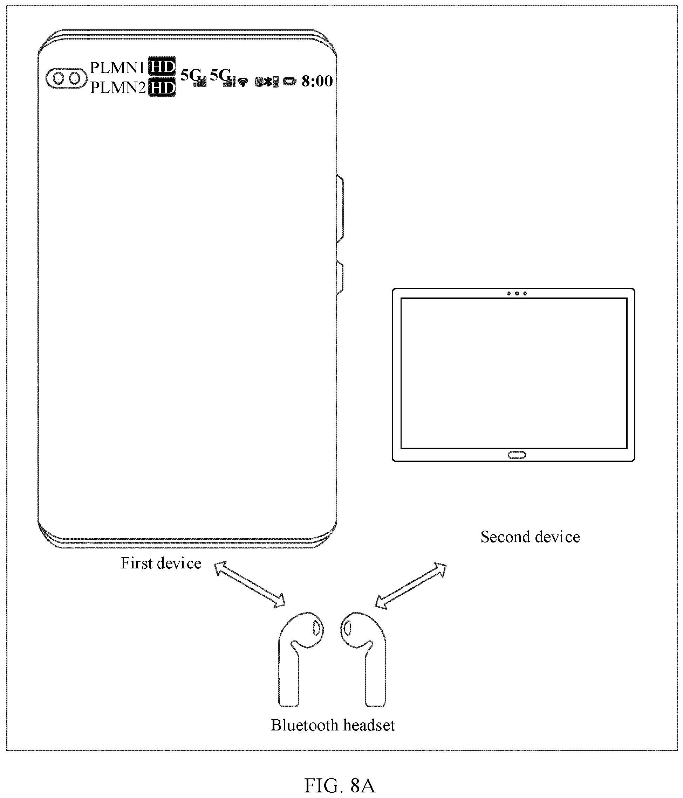

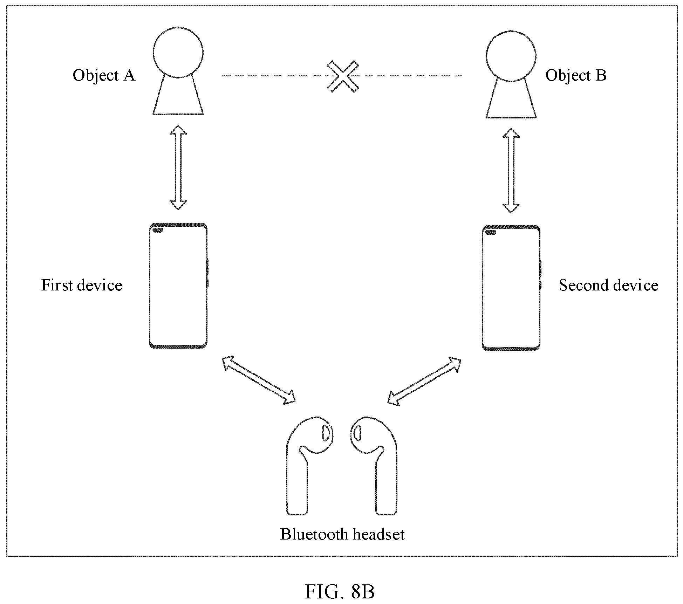

The schematic diagrams of the interfaces of FIG. 5A to FIG. 7C provided in embodiments of this application are applicable to the following scenarios. For example, as shown in FIG. 8A and FIG. 8B:
In an embodiment of this application, the Bluetooth headset-based call method provided in embodiments of this application is described using an example in which each of the first device and the second device is a mobile phone. It may be understood that the first device and the second device may be a same type of terminal devices; or the first device and the second device may be different types of terminal devices.

For example, the terminal devices include but are not limited to terminals such as mobile phones, tablet computers, and personal computers (personal computer, PC). In a possible implementation, for example, as shown in FIG. 8A, the first device may be a mobile phone, and the second device may be a tablet computer. A user wearing a Bluetooth headset may do an office job using the tablet computer, and the user simultaneously worries that an important message on the mobile phone is not received during the office job. In this case, the user may set up a Bluetooth channel between the Bluetooth headset and each of the mobile phone and the tablet computer, and the Bluetooth headset may play audio of the mobile phone and audio of the tablet computer.

When the mobile phone is executing a voice call, and the tablet computer receives a call of a third device or the tablet computer initiates a call to the third device, the two terminal devices may use the Bluetooth headset-based call method provided in embodiments of this application, and the user may choose to answer the call of the tablet computer and drop the call of the mobile phone, answer the call of the tablet computer and hold the call of the mobile phone, and drop an incoming call or outgoing call of the tablet computer through different tapping gestures. In this way, when the user performs Bluetooth connections to a plurality of terminal devices using the Bluetooth headset, a scenario in which call audio of any terminal device is played outward does not occur, thereby improving use experience of the user.

In another possible implementation, as shown in FIG. 8B, when a user wearing a Bluetooth headset makes a call to an object A using a first device, and a second device of the user receives an incoming call of an object B or makes an outgoing call to the object B, the two terminal devices may use the Bluetooth headset-based call method provided in embodiments of this application. If the user answers the call of the object B, the Bluetooth headset controls the first device to hold the call of the object A or drop the call of the object A; or if the user rejects the call of the object B, the Bluetooth headset controls the second device to drop the call of the object B. In a process in which the user makes a call to any object, the terminal device does not play call audio outward. In this way, the object B cannot learn content of the call between the user and the object A based on the call audio played outward by the first device, thereby improving security of call information, and further improving use experience of the user.

It should be noted that, this embodiment of this application may be further used for other scenarios. This is not described in embodiments of this application using examples.

In the Bluetooth headset-based call method provided in this embodiment of this application, the Bluetooth headset may execute different procedures according to different triggering operations. Setting of a triggering operation on a Bluetooth headset in an embodiment of this application is described below with reference to content of the interfaces shown in FIG. 5A to FIG. 7C.

For example, when the Bluetooth headset receives a first operation, the Bluetooth headset controls, the second device to answer the second call, the Bluetooth headset plays the audio of the second call from the second device, and the Bluetooth headset controls the first device to hold the first call. Alternatively, when the Bluetooth headset receives a second operation, the Bluetooth headset controls the second device to answer the second call, the Bluetooth headset plays the audio of the second call from the second device, and the Bluetooth headset controls the first device to drop the first call. Alternatively, when the Bluetooth headset receives a third operation, the Bluetooth headset controls the second device to reject the second call, and the Bluetooth headset plays the audio of the first call from the first device.

The first operation corresponds to the triggering operation used for holding the first call and answering the second call in FIG. 5B; the second operation may correspond to the triggering operation used for dropping the first call and answering the second call in FIG. 6B; and the third operation may correspond to the triggering operation used for rejecting the second call in FIG. 7B. The first operation, the second operation, and the third operation may be set to three different triggering operations.

The first operation includes an operation of tapping the Bluetooth headset, the second operation includes an operation of tapping the Bluetooth headset, and the third operation includes an operation of tapping the Bluetooth headset. A tapping count of the first operation, a tapping count of the second operation, and a tapping count of the third operation are different from each other, and/or each of the first operation, the second operation, and the third operation is directed to headsets on two sides of the Bluetooth headset.

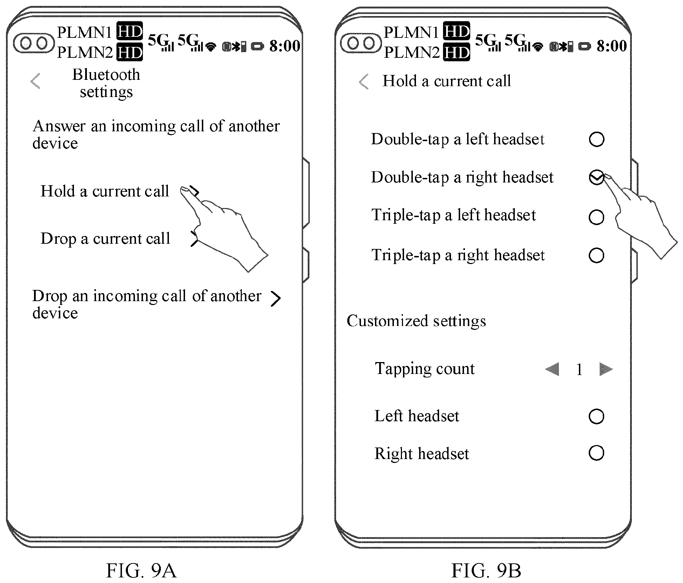

For example, an embodiment of this application provides an implementation of setting a triggering operation on a Bluetooth headset. FIG. 9A and FIG. 9B are schematic diagrams of an interface of setting a triggering operation on a Bluetooth headset according to an embodiment of this application. As shown in FIG. 9A, a terminal device may display a Bluetooth setting interface, the interface may include options of answering an incoming call of another device and dropping an incoming call of another device, and the answering an incoming call of another device may include a current call holding button and a current call dropping button.

A further description is made below using an example of setting a first operation. In an interface shown in FIG. 9A, when receiving a triggering operation directed to the current call holding button, the terminal device may enter an interface of FIG. 9B. The interface of FIG. 9B may include a plurality of gestures for triggering operations on the Bluetooth headset, for example, double tapping of a left headset, double tapping of a right headset, triple tapping of the left headset, and triple tapping of the right headset. A user may further customize, based on the interface of FIG. 9B, gestures for triggering operations on the Bluetooth headset, for example, the terminal device may set a tapping count and tap headsets on two sides of the Bluetooth headset.

After the terminal device sets the first operation, the terminal device may continue to set a second operation, where the second operation is different from the first operation. For example, after the terminal device sets the first operation to double tapping of the right headset, a right headset double tapping button in the interface of FIG. 9B is displayed to be in a selected state. When the terminal device receives a triggering operation directed to the current call drop button subsequently, the terminal device displays an interface of dropping a current call (similar to the interface of FIG. 9B), where the set first operation (for example, double tapping of the right headset) may be displayed to be in a non-selectable state. Similarly, when the terminal device sets a third operation, each of the set first operation and the second operation is displayed to be in the non-selectable state. In this way, the terminal device may set the first operation, the second operation, and the third operation to different operation gestures, to ensure that the Bluetooth headset may subsequently execute different call procedures based on different triggering operations.

It may be understood that FIG. 9A and FIG. 9B exemplarily provide schematic diagrams of an interface of setting a first operation. During actual operating, the interface of setting a first operation may not be the interface shown in FIG. 9A and FIG. 9B, and a triggering operation on the Bluetooth headset may alternatively be another form of triggering operation. This is not limited in this embodiment of this application.

It may be understood that the interface provided in embodiments of this application is only an example, and does not constitute a limitation on embodiments of this application.

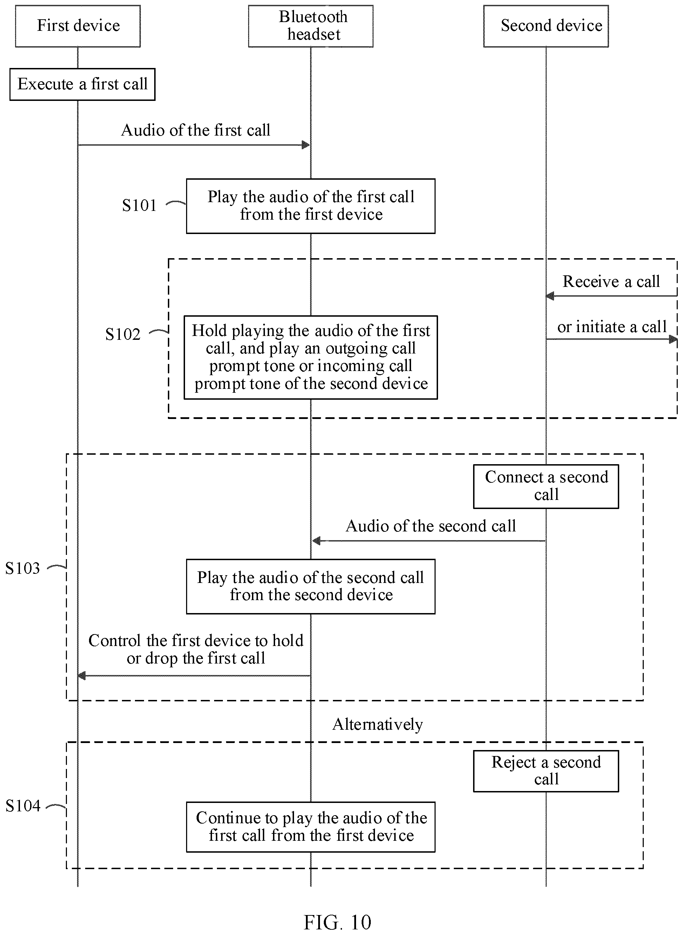

The use scenarios of the Bluetooth headset-based call method provided in embodiments of this application are described in the foregoing embodiments, and a procedure of the Bluetooth headset-based call method provided in embodiments of this application is described below with reference to FIG. 10. FIG. 10 is a schematic flowchart of a Bluetooth headset-based call method according to an embodiment of this application. As shown in FIG. 10:
For example, S101: A Bluetooth headset plays audio of a first call from a first device.

In this embodiment of this application, the Bluetooth headset can support simultaneous connections to a plurality of terminal devices, the plurality of terminal devices include a first device and a second device, and the Bluetooth headset sets up a Bluetooth connection to each of the first device and the second device. The first device may be a device that is executing a voice call service; and the first call may be a call executed by the first device. The first device may execute the first call, and the first device may send the audio of the first call to the Bluetooth headset. The Bluetooth headset plays the audio of the first call.

S102: The Bluetooth headset holds playing the audio of the first call, and the Bluetooth headset plays an outgoing call prompt tone or incoming call prompt tone of the second device, when the second device initiates a call to a third device or the second device receives a call from the third device.

The second device may be a device that is of devices to which the Bluetooth headset sets up Bluetooth connections and that is currently not executing a voice call service. The third device may be a device to which the second device makes a voice call. The incoming call prompt tone is used for reminding a user to answer a call when the terminal device receives the call; and the outgoing call prompt tone is used for reminding the user to wait for a counterpart to answer a call when the terminal device initiates the call to another device.

When the first device executes the first call, the second device may receive an incoming call of the third device or initiate an outgoing call to the third device. The Bluetooth headset may simultaneously play the audio of the first call of the first device and the incoming call prompt tone or outgoing call prompt tone of the second device.

S103: The Bluetooth headset plays audio of the second call from the second device, and the Bluetooth headset controls the first device to hold or drop the first call, when the second device connects a second call.

The second call may be a call executed by the second device. When the second device receives an incoming call or initiates an outgoing call, the second device may choose to connect the second call. When the second device connects the second call, the Bluetooth headset may control the first device to hold the first call or drop the first call. The Bluetooth headset plays the audio of the second call of the second device, and the Bluetooth headset does not play the audio of the first call of the first device.

Alternatively, S104: The Bluetooth headset continues to play the audio of the first call from the first device when the second device rejects the second call.

When the second device receives an incoming call or initiates an outgoing call, the second device may choose to reject the second call. When the second device rejects the second call, the Bluetooth headset may control the first device to continue to execute the first call. The Bluetooth headset may continue to play the audio of the first call of the first device, and the Bluetooth headset does not play the audio of the second call of the second device.

An embodiment of this application provides a Bluetooth headset-based call method, where a Bluetooth headset plays audio of a first call from a first device; the Bluetooth headset holds playing the audio of the first call, and the Bluetooth headset plays an outgoing call prompt tone or incoming call prompt tone of the second device, when the second device initiates a call to a third device or the second device receives a call from the third device; and the Bluetooth headset plays audio of the second call from the second device, and the Bluetooth headset controls the first device to hold or drop the first call, when the second device connects a second call; or the Bluetooth headset continues to play the audio of the first call from the first device when the second device rejects the second call. In this way, when the second device is called or initiates a call, a situation in which the Bluetooth headset immediately plays the audio of the second device and the audio of the first device is played outward does not occur. In addition, the first device holds the call or drops the call, and the Bluetooth headset plays the audio of the second device, when the second device connects the call; or the Bluetooth headset plays the audio of the first device when the second device rejects the call, and a situation in which the audio of the first device is played outward because of the call of the second device does not occur, thereby improving use experience of a user.

In this embodiment of this application, in the scenarios of FIG. 5B, FIG. 6B, and FIG. 7B, the user may hear a mixed sound of the audio of the first call played by the Bluetooth headset and the incoming call prompt tone or outgoing call prompt tone of the second device. Step S102 in this embodiment of this application is described below.

S1021: The Bluetooth headset detects a call state of the second device.

When the second device initiates a call to a third device or the second device receives a call from the third device, the Bluetooth headset may update the call state of the second device. The second device may send a call state message to a Bluetooth module of the Bluetooth headset, and the Bluetooth module of the Bluetooth headset may also request to query the call state of the second device by sending the call state message. For example, using an example in which the second device actively updates the call state to the Bluetooth headset side, the call state message may be an AT (attention) command, and the AT command is used for signaling of connection and communication between the terminal device and the Bluetooth headset. The AT command may be +CIEV:<indicator>,<value>. For example, a value of an indicator (indicator) of a call setup (callsetup) process may be 2. A value corresponding to the value in the callsetup process may be 0, 1, 2, or 3, where when the value is 1, it indicates that the second device receives a call of the third device, and when the value is 2, it indicates that the second device initiates a call to the third device.

When the call state of the second device is changed (the second device is called or initiates a call), the second device may send a corresponding AT command to the Bluetooth headset, and the Bluetooth headset obtains the call state of the second device based on the AT command.

S 1022: The Bluetooth headset mixes the incoming call prompt tone and the audio of the first call, and plays the incoming call prompt tone and the audio of the first call that are mixed, when the call state of the second device is an incoming call state.

The second device updates the incoming call state to the Bluetooth headset side, for example, the second device sends +CIEV:<2>,<1> to the Bluetooth module of the Bluetooth headset. The Bluetooth module of the Bluetooth headset may determine that the second device is in a state of receiving the call of the third device at this moment. The Bluetooth module of the Bluetooth headset may instruct an audio module to mix the incoming call prompt tone and the audio of the first call.

In some embodiments, the incoming call prompt tone and the outgoing call prompt tone may be prompt tones stored in the Bluetooth headset. The Bluetooth headset may determine according to the +CIEV:<2>,<1> command that the second device is in the incoming call state and may obtain the incoming call prompt tone stored in the Bluetooth headset. The Bluetooth headset may also receive the audio of the first call of the first device based on a first SCO link. The Bluetooth headset mixes the audio of the first call and the incoming call prompt tone, to enable the Bluetooth headset to simultaneously play the audio of the first call and the incoming call prompt tone.

It may be understood that in this embodiment of this application, when the second device is in the call setup process, the Bluetooth headset performs audio communication with the first device through the first SCO link. The Bluetooth headset obtains only the incoming call state of the second device, but does not set up a second SCO link to the second device, so that in this embodiment of this application, the incoming call prompt tone played by the Bluetooth headset is a preset prompt tone in the Bluetooth headset rather than the incoming call prompt tone sent by the second device, and the incoming call prompt tone heard by the user may be different from the actual incoming call prompt tone of the second device.

Alternatively, S1023: The Bluetooth headset mixes the outgoing call prompt tone and the audio of the first call, and plays the outgoing call prompt tone and the audio of the first call that are mixed, when the call state of the second device is an outgoing call state.

The second device updates the outgoing call state to the Bluetooth headset side, for example, the second device sends +CIEV:<2>,<2> to the Bluetooth module of the Bluetooth headset. The Bluetooth module of the Bluetooth headset may determine that the second device is in a state of initiating a call to the third device at this moment. The Bluetooth module of the Bluetooth headset may instruct an audio module to mix the outgoing call prompt tone and the audio of the first call. In some embodiments, the incoming call prompt tone and the outgoing call prompt tone may be prompt tones stored in the Bluetooth headset. The Bluetooth headset may determine according to the +CIEV:<2>,<2> command that the second device is in the outgoing call state and may obtain the outgoing call prompt tone stored in the Bluetooth headset. The Bluetooth headset may also receive the audio of the first call of the first device based on a first SCO link. The Bluetooth headset mixes the audio of the first call and the outgoing call prompt tone, to enable the Bluetooth headset to simultaneously play the audio of the first call and the outgoing call prompt tone.

In the Bluetooth headset-based call method provided in this embodiment of this application, the Bluetooth headset detects the call state of the second device; and the Bluetooth headset mixes the incoming call prompt tone and the audio of the first call, and plays the incoming call prompt tone and the audio of the first call that are mixed, when the call state of the second device is an incoming call state; or the Bluetooth headset mixes the outgoing call prompt tone and the audio of the first call, and plays the outgoing call prompt tone and the audio of the first call that are mixed, when the call state of the second device is an outgoing call state. In this way, the Bluetooth headset plays, according to a call state of the second device, a prompt tone pre-stored in the Bluetooth headset, and does not need to set up the second SCO link to obtain a prompt tone of the second device, thereby reducing scenarios in which the audio of the first call of the first device is played outward and improving call experience of the user.

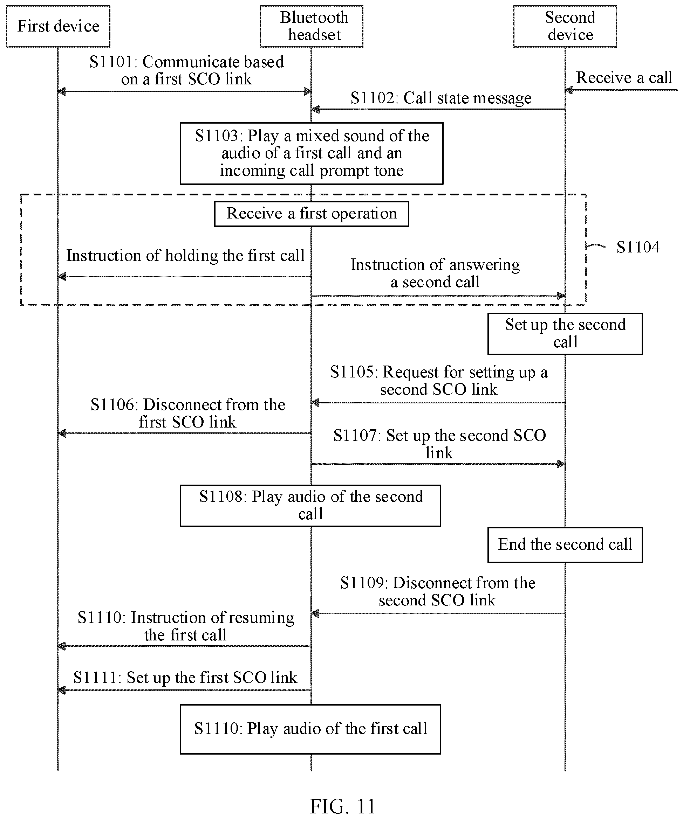

Procedures of implementing scenarios of FIG. 5A to FIG. 5C in embodiments of this application are described below with reference to FIG. 11. FIG. 11 is a schematic flowchart of a Bluetooth headset-based call method according to an embodiment of this application. As shown in FIG. 11: S1101: A Bluetooth headset communicates with a first device based on a first SCO link.

The first device is executing a first call, and the Bluetooth headset may receive audio of the first call based on the first SCO link, and play the audio of the first call.

S1102: When a second device receives a call of a third device, the second device sends a call state message to the Bluetooth headset.

When a call state of the second device is changed, the second device may update the call state to the Bluetooth headset. For example, the second device sends a call state message +CIEV:<2>,<1> to the Bluetooth headset. In some embodiments, a Bluetooth module of the Bluetooth headset may obtain a call state message, and determine a call state of the second device based on the call state message.

S1103: The Bluetooth headset plays a mixed sound of the audio of the first call and an incoming call prompt tone.

The Bluetooth headset may determine the call state of the second device according to the call state message. When the call state of the second device is an incoming call state, the Bluetooth module of the Bluetooth headset may instruct an audio module to play the mixed sound of the audio of the first call and the incoming call prompt tone.

S1104: When the Bluetooth headset receives a first operation, the Bluetooth headset sends a command of holding the first call to the first device, and sends a command of answering a second call to the second device.

The Bluetooth headset receives the first operation; and in response to the first operation, the Bluetooth headset may instruct the first device to hold the first call, and the Bluetooth headset may alternatively instruct the second device to connect the second call. For example, the Bluetooth headset sends a command of holding the first call to the first device, and the command of holding the first call may be AT+BTRH=1, where AT+BTRH=n. When n=1, the terminal device may hold a call; and when n=0, the terminal device may recover from a call holding state to a normal call state. After receiving the AT+BTRH=1 command, the first device may hold the first call.

The Bluetooth headset sends a command of answering a second call to the second device, and the command of answering the second call may be a standard call AT answer (ATA) command. After the second device receives the ATA command, the second device may execute a callsetup process. S1105: When execution of the callsetup process of the second device is finished, the second device sends a request for setting up a second SCO link to the Bluetooth headset.

When the second device executes the callsetup process completely, the second device may notify the Bluetooth headset that the callsetup process is finished and a call is set up. For example, the second device may send a +CIEV:<2>,<0> command and a +CIEV:<1>,<1> command to the Bluetooth headset. The +CIEV:<2>,<0> command is used for indicating that the callsetup process ends; and the +CIEV:<1>,<1> command is used for indicating that a call is successful. The second device sends a request for setting up a second SCO link to the Bluetooth headset, and the request for setting up the second SCO link may be an audio connection set up command.

S1106: The Bluetooth headset disconnects from the first SCO link to the first device.

The Bluetooth headset determines based on the message in step S1105 that the second device has set up the second call, the Bluetooth headset may send a message used for disconnecting from the first SCO link to the first device, and the Bluetooth headset disconnects from the first SCO link to the first device. The message used for disconnecting from the first SCO link may be an audio connection release command.

S1107: The Bluetooth headset sets up a second SCO link to the second device.

After disconnecting from the first SCO link, the Bluetooth headset may send, in response to the request for setting up the second SCO link, a message for accepting setup of the second SCO link to the second device. The Bluetooth headset sets up a second SCO link to the second device.

S1108: The Bluetooth headset receives the audio of the second call through the second SCO link, and plays the audio of the second call.

After the Bluetooth headset sets up the second SCO link to the second device, the second device may send the audio of the second call to the Bluetooth headset based on the second SCO link, and the Bluetooth headset plays the audio of the second call.

Optionally, after step S1108, the method may further include:
S1109: The Bluetooth headset disconnects from the second SCO link to the second device when the second device drops the second call.

When the second device ends the second call, the second device may send a call end message to the Bluetooth device, and disconnect from the second SCO link. For example, the call end message may be +CIEV:<1>,<0>.

S1110: The Bluetooth headset sends a command of resuming the first call to the first device. The command of resuming the first call may be AT+BTRH=0. After receiving the command, the first device recovers the first call from a call holding state to a normal call state.

It should be noted that, the command of holding the first call and the command of resuming the first call may alternatively be customized commands. This is not limited in this embodiment of this application.

S1111: The Bluetooth headset sets up the first SCO link to the first device.

The Bluetooth headset may set up the first SCO link to the first device through a command of setting up the first SCO link. In a possible implementation, the command of setting up the first SCO link may be an AT+BCC command, and the Bluetooth headset may set up the first SCO link to the first device through the AT+BCC command. In another possible implementation, the command of setting up the first SCO link may be an audio connection set up command. This is not limited in this embodiment of this application.

S1112: The Bluetooth headset plays the audio of the first call of the first device.

The Bluetooth headset receives the audio of the first call through the first SCO link, and plays the audio of the first call.

It may be understood that content described in FIG. 5A to FIG. 5C is described in detail in this embodiment of this application using an example in which the second device receives the call of the third device. A process in which the second device initiates a call to the third device is similar to steps S1101 to S1112, and details are not described in this embodiment of this application.

In the Bluetooth headset-based call method provided in this embodiment of this application, when the second device makes a call and is called, the Bluetooth headset does not disconnect from the first SCO link, and the Bluetooth headset plays a mixed sound of the audio of the first call and a prompt tone; and when the second device connects the second call, the Bluetooth headset disconnects from the first SCO link and sets up the second SCO link. In this way, a situation in which the Bluetooth headset immediately disconnects from the first SCO link and therefore the call audio of the first device is played outward does not occur. In addition, when the Bluetooth headset and the first device disconnect from the first SCO link, the call of the first device is in a held state, and a situation in which the call audio of the first device is played outward does not occur, thereby improving use experience of the user.

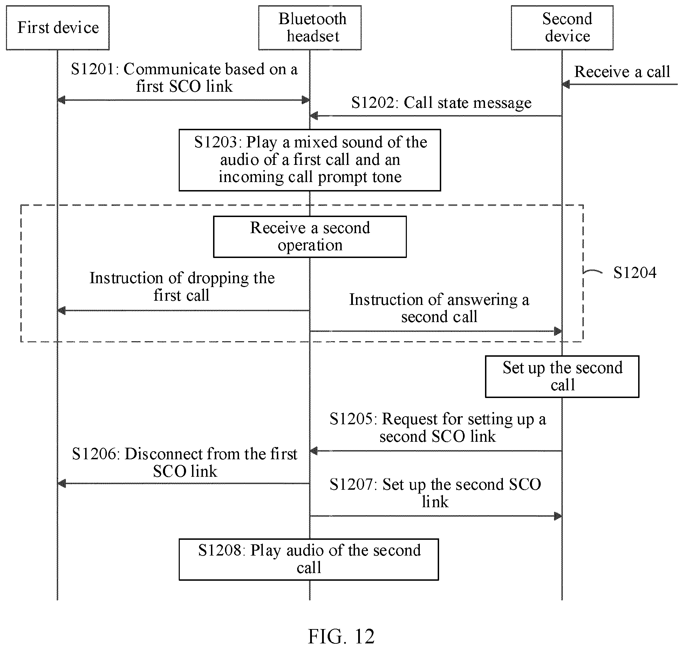

Procedures of implementing scenarios of FIG. 6A to FIG. 6C in embodiments of this application are described below with reference to FIG. 12. FIG. 12 is a schematic flowchart of a Bluetooth headset-based call method according to an embodiment of this application. As shown in FIG. 12:
S1201: A Bluetooth headset communicates with a first device based on a first SCO link.
S1202: When a second device receives a call of a third device, the second device sends a call state message to the Bluetooth headset.
S1203: The Bluetooth headset plays a mixed sound of the audio of the first call and an incoming call prompt tone.

For steps S1201 to S1203, reference may be made to descriptions of steps S1101 to 1103. Details are not described herein again.

S1204: When the Bluetooth headset receives a second operation, the Bluetooth headset sends a command of dropping the first call to the first device, and sends a command of answering a call to the second device.

The Bluetooth headset receives the second operation; and in response to the second operation, the Bluetooth headset may instruct the first device to drop the first call, and the Bluetooth headset may alternatively instruct the second device to connect the second call. For example, the Bluetooth headset sends a command of dropping the first call to the first device, and the command of dropping the first call may be an AT+Chup command. After receiving the AT+Chup command, the first device may drop the first call.

The Bluetooth headset sends a command of answering a call to the second device, and the command of answering a call may be a standard call AT answer (ATA) command. After the second device receives the ATA command, the second device may execute a callsetup process.

S1205: When execution of the callsetup process of the second device is finished, the second device sends a request for setting up a second SCO link to the Bluetooth headset.

S1206: The Bluetooth headset disconnects from the first SCO link to the first device.

S1207: The Bluetooth headset sets up a second SCO link to the second device.

S1208: The Bluetooth headset receives the audio of the second call through the second SCO link, and plays the audio of the second call.

For steps S1205 to S1208, reference may be made to descriptions of steps S1105 to 1108. Details are not described herein again.

It may be understood that content described in FIG. 6A to FIG. 6C is described in detail in this embodiment of this application using an example in which the second device receives the call of the third device. A process in which the second device initiates a call to the third device is similar to steps S1201 to S1208, and details are not described in this embodiment of this application.

In the Bluetooth headset-based call method provided in this embodiment of this application, when the second device makes a call and is called, the Bluetooth headset does not disconnect from the first SCO link, and the Bluetooth headset plays a mixed sound of the audio of the first call and a prompt tone; and when the second device connects the second call, the Bluetooth headset disconnects from the first SCO link and sets up the second SCO link. In this way, a situation in which the Bluetooth headset immediately disconnects from the first SCO link and therefore the call audio of the first device is played outward does not occur. In addition, when the Bluetooth headset and the first device disconnect from the first SCO link, the call of the first device is in a held state, and a situation in which the call audio of the first device is played outward does not occur, thereby improving use experience of the user.

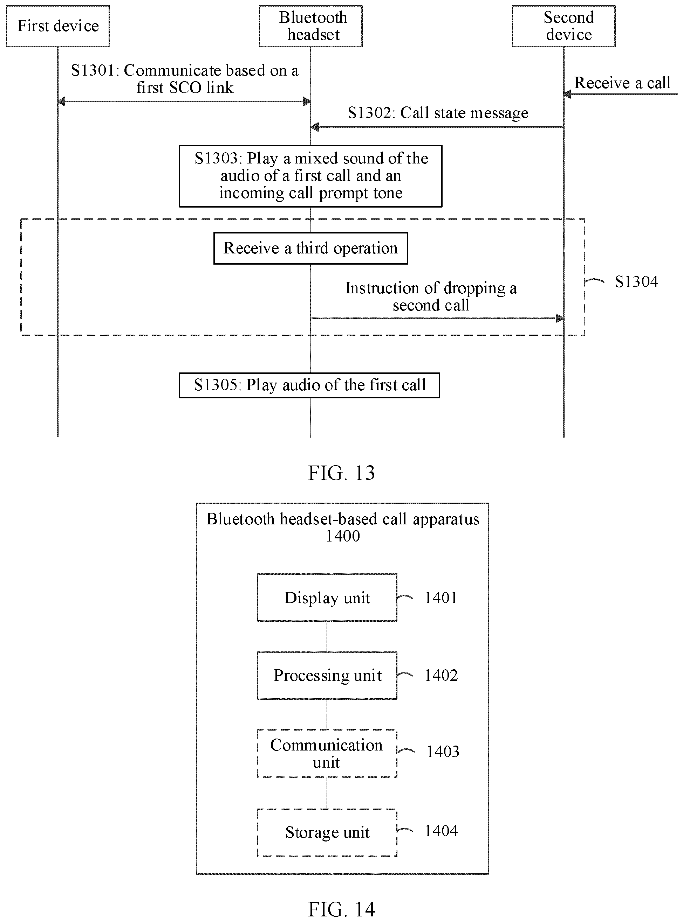

Procedures of implementing scenarios of FIG. 7A to FIG. 7C in embodiments of this application are described below with reference to FIG. 13. FIG. 13 is a schematic flowchart of a Bluetooth headset-based call method according to an embodiment of this application. As shown in FIG. 13: S1301: A Bluetooth headset communicates with a first device based on a first SCO link.

S1302: When a second device receives a call of a third device, the second device sends a call state message to the Bluetooth headset.

S1303: The Bluetooth headset plays a mixed sound of the audio of the first call and an incoming call prompt tone.

For steps S1301 to S1303, reference may be made to descriptions of steps S1101 to 1103. Details are not described herein again.

S1304: When the Bluetooth headset receives a third operation, the Bluetooth headset sends a command of rejecting a second call to the second device.

The Bluetooth headset receives the third operation; and in response to the third operation, the Bluetooth headset may instruct the second device to reject the second call. For example, the Bluetooth headset sends a command of rejecting the second call to the second device, and the command of rejecting the second call may be an AT+Chup command. After the second device receives the AT+Chup command, the second device may reject answering the second call.

S1305: The Bluetooth headset plays the audio of the first call of the first device.

It may be understood that in the process in which the Bluetooth headset controls the second device to reject the second call, the Bluetooth headset holds the first SCO link to the first device.

The Bluetooth headset may continue to receive the audio of the first call through the first SCO link, and play the audio of the first call.

It should be noted that, content described in FIG. 7A to FIG. 7C is described in detail in this embodiment of this application using an example in which the second device receives the call of the third device. A process in which the second device initiates a call to the third device is similar to steps S1301 to S1308, and details are not described in this embodiment of this application.

In the Bluetooth headset-based call method provided in this embodiment of this application, when the second device makes a call and is called, the Bluetooth headset does not disconnect from the first SCO link, and the Bluetooth headset plays a mixed sound of the audio of the first call and a prompt tone; and when the second device rejects the second call, the Bluetooth headset always holds the connection relationship with the first SCO link. In this way, a situation in which the Bluetooth headset immediately disconnects from the first SCO link and therefore the call audio of the first device is played outward does not occur, thereby improving use experience of the user. The foregoing describes the method provided in embodiments of this application with reference to FIG. 5A to FIG. 13. The following describes an apparatus for performing the foregoing method in embodiments of this application. As shown in FIG. 14, FIG. 14 is a schematic diagram of a structure of a Bluetooth headset-based call apparatus according to an embodiment of this application. The Bluetooth headset-based call apparatus 1400 may be the terminal device in embodiments of the present application or a chip or chip system in the terminal device.

As shown in FIG. 14, the Bluetooth headset-based call apparatus 1400 may be applied to a communication device, a circuit, a hardware component, or a chip, and the Bluetooth headset-based call apparatus includes a display unit 1401 and a processing unit 1402. The display unit 1401 is configured to support the Bluetooth headset-based call apparatus 1400 in performing a display step. The processing unit 1402 is configured to support the Bluetooth headset-based call apparatus 1400 in performing an information processing step.

In a possible implementation, the Bluetooth headset-based call apparatus 1400 may also include a communication unit 1403. Specifically, the communication unit is configured to support the Bluetooth headset-based call apparatus 1400 in performing data sending and data receiving steps. The communication unit 1403 may be an input or output interface, a pin, or a circuit.

In a possible embodiment, the Bluetooth headset-based call apparatus may further include a storage unit 1404. The processing unit 1402 is connected to the storage unit 1404 through a line. The storage unit 1404 may include one or more memories, and the memory may be one or more devices or components in a circuit that are used to store a program or data. The storage unit 1404 may exist independently and be connected, through a communication line, to the processing unit 1402 of the Bluetooth headset-based call apparatus. The storage unit 1404 may alternatively be integrated with the processing unit 1402.

The storage unit 1404 may store computer-executable instructions of the method of the terminal device, so that the processing unit 1402 performs the method in the foregoing embodiments. The storage unit 1404 may be a register, a cache, a RAM, or the like, and the storage unit 1404 may be integrated with the processing unit 1402. The storage unit 1404 may be a read-only memory (read-only memory, ROM) or another type of static storage device that may store static information and instructions, and the storage unit 1404 may be independent of the processing unit 1402.

In the foregoing embodiments, the instructions executed by the processor stored in the memory may be implemented in the form of a computer program product. The computer program product may be pre-written in the memory, or may be downloaded and installed in the memory in the form of software.

The computer program product includes one or more computer instructions. When the computer program instructions are loaded and executed on the computer, the procedure or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, including one or more usable media. For example, the usable medium may include a magnetic medium (for example, a floppy disk, a hard disk, or a magnetic tape), an optical medium (for example, a digital versatile disc (digital versatile disc, DVD)), a semi-conductive medium (for example, a solid state disk (solid state disk, SSD)), or the like.

An embodiment of this application further provides a computer-readable storage medium. The method described in the foregoing embodiments may be fully or partially implemented by software, hardware, firmware, or any combination thereof. The computer-readable medium may include a computer storage medium and a communication medium, and may further include any medium that can transmit a computer program from one place to another. The storage medium may be any target medium accessible to a computer.

In a possible design, the computer-readable storage medium may include a compact disc read-only memory (compact disc read-only memory, CD-ROM), a RAM, a ROM, an EEPROM, or another optical disc memory. The computer-readable medium may include a magnetic disk memory or another magnetic disk storage device. Any connection line may also be appropriately referred to as a computer-readable medium. For example, if software is transmitted from a website, a server or another remote source by using a coaxial cable, an optical fiber cable, a twisted pair, a DSL or wireless technologies (such as infrared ray, radio, and microwave), the coaxial cable, optical fiber cable, twisted pair, DSL or wireless technologies such as infrared ray, radio, and microwave are included in the definition of the medium. A magnetic disk and an optical disc used herein include an optical disc (CD), a laser disc, an optical disc, a digital versatile disc (digital versatile disc, DVD), a floppy disk, and a blue ray disc, where the magnetic disk generally reproduces data in a magnetic manner, and the optical disc reproduces data optically by using laser.

The foregoing combination should also be included in the scope of the computer-readable medium. The foregoing descriptions are merely specific implementations of the present invention, but are not intended to limit the protection scope of the present invention. Therefore, the protection scope of the present invention shall be subject to the protection scope of the claims.

## Claims

1. A Bluetooth headset-based call method, applied to a Bluetooth headset (200) supporting simultaneous connections to a plurality of terminal devices (100), wherein the plurality of terminal devices (100) comprise a first device (101) and a second device (102), the Bluetooth headset (200) sets up a Bluetooth connection to each of the first device (101) and the second device (102), and the method comprises:
playing, by the Bluetooth headset (200), audio of a first call from the first device (101);
holding, by the Bluetooth headset (200), playing the audio of the first call, and playing, by the Bluetooth headset (200), an outgoing call prompt tone or incoming call prompt tone of the second device (102), when the second device (102) initiates a call to a third device or the second device (102) receives a call from the third device; and
playing, by the Bluetooth headset (200), audio of the second call from the second device (102), and controlling, by the Bluetooth headset (200), the first device (101) to hold or drop the first call, when the second device (102) connects a second call; or
continuing, by the Bluetooth headset (200), to play the audio of the first call from the first device (101) when the second device (102) rejects the second call;
wherein the Bluetooth headset (200) stores the outgoing call prompt tone and the incoming call prompt tone, and the playing, by the Bluetooth headset (200), the audio of the first call, and playing, by the Bluetooth headset (200), an outgoing call prompt tone or incoming call prompt tone of the second device (102), when the second device (102) initiates a call to a third device or receives a call from the third device comprises:
detecting, by the Bluetooth headset (200), a call state of the second device (102); and
mixing, by the Bluetooth headset (200), the incoming call prompt tone and the audio of the first call, and playing the incoming call prompt tone and the audio of the first call that are mixed, when the call state of the second device (102) is an incoming call state; or
mixing, by the Bluetooth headset (200), the outgoing call prompt tone and the audio of the first call, and playing the outgoing call prompt tone and the audio of the first call that are mixed, when the call state of the second device (102) is an outgoing call state;
wherein the playing, by the Bluetooth headset (200), audio of the second call from the second device (102) when the second device (102) connects a second call comprises:
disconnecting, by the Bluetooth headset (200), from a first synchronous connection oriented, SCO, link to the first device (101);
setting up, by the Bluetooth headset (200), a second SCO link to the second device (102); and
receiving, by the Bluetooth headset (200), the audio of the second call through the second SCO link, and playing the audio of the second call.

2. The method according to claim 1, wherein the playing, by the Bluetooth headset (200), audio of the second call from the second device (102), and controlling, by the Bluetooth headset (200), the first device (101) to hold or drop the first call, when the second device (102) connects a second call comprises:
controlling, by the Bluetooth headset (200), the second device (102) to answer the second call, playing, by the Bluetooth headset (200), the audio of the second call from the second device (102), and controlling, by the Bluetooth headset (200), the first device (101) to hold the first call, when the Bluetooth headset (200) receives a first operation; or
controlling, by the Bluetooth headset (200), the second device (102) to answer the second call, playing, by the Bluetooth headset (200), the audio of the second call from the second device (102), and controlling, by the Bluetooth headset (200), the first device (101) to drop the first call, when the Bluetooth headset (200) receives a second operation, wherein the second operation is different from the first operation.

3. The method according to claim 1, wherein after the receiving, by the Bluetooth headset (200), the audio of the second call through the second SCO link, the method further comprises:
disconnecting, by the Bluetooth headset (200), from the second SCO link to the second device (102) when the second device (102) drops the second call;
setting up, by the Bluetooth headset (200), the first SCO link to the first device (101); and
receiving, by the Bluetooth headset (200), the audio of the first call through the first SCO link, and playing the audio of the first call.

4. The method according to any one of claims 1 to 2, wherein the playing, by the Bluetooth headset (200), the audio of the first call from the first device (101) when the second device (102) rejects the second call comprises:
holding, by the Bluetooth headset (200), a first SCO link to the first device (101); and
continuing, by the Bluetooth headset (200), to receive the audio of the first call through the first SCO link, and playing the audio of the first call.

5. A Bluetooth headset, wherein the Bluetooth headset comprises a processor (201), and the processor (201) is configured to invoke a computer program in a memory (203) to perform the method according to any one of claims 1 to 4.

6. A computer-readable storage medium, wherein the computer-readable storage medium stores instructions, and when the instructions are executed, a Bluetooth headset is enabled to perform the method according to any one of claims 1 to 4.

7. A computer program product, wherein when the computer program product is run on a Bluetooth headset, the Bluetooth headset is enabled to perform the method according to any one of claims 1 to 4.

## Patentansprüche

1. Auf einem Bluetooth-Headset basierendes Anrufverfahren, angewendet auf ein Bluetooth-Headset (200), das gleichzeitige Verbindungen mit einer Vielzahl von Endgeräten (100) unterstützt, wobei die Vielzahl von Endgeräten (100) ein erstes Gerät (101) und ein zweites Gerät (102) umfasst, wobei das Bluetooth-Headset (200) eine Bluetooth-Verbindung mit jedem des ersten Geräts (101) und des zweiten Geräts (102) aufbaut, und das Verfahren Folgendes umfasst:
Wiedergeben, durch das Bluetooth-Headset (200), von Audio eines ersten Anrufs vom ersten Gerät (101);
Halten, durch das Bluetooth-Headset (200), der Wiedergabe des Audios des ersten Anrufs, und Wiedergeben, durch das Bluetooth-Headset (200), eines Hinweistons für einen ausgehenden Anruf oder eines Hinweistons für einen eingehenden Anruf des zweiten Geräts (102), wenn das zweite Gerät (102) einen Anruf an ein drittes Gerät initiiert oder das zweite Gerät (102) einen Anruf vom dritten Gerät empfängt; und
Wiedergeben, durch das Bluetooth-Headset (200), von Audio des zweiten Anrufs vom zweiten Gerät (102), und Steuern, durch das Bluetooth-Headset (200), des ersten Geräts (101), um den ersten Anruf zu halten oder zu beenden, wenn das zweite Gerät (102) einen zweiten Anruf verbindet; oder
Fortsetzen, durch das Bluetooth-Headset (200), der Wiedergabe des Audios des ersten Anrufs vom ersten Gerät (101), wenn das zweite Gerät (102) den zweiten Anruf ablehnt;
wobei das Bluetooth-Headset (200) den Hinweiston für einen ausgehenden Anruf und den Hinweiston für einen eingehenden Anruf speichert, und das Wiedergeben, durch das Bluetooth-Headset (200), des Audios des ersten Anrufs, und das Wiedergeben, durch das Bluetooth-Headset (200), eines Hinweistons für einen ausgehenden Anruf oder eines Hinweistons für einen eingehenden Anruf des zweiten Geräts (102), wenn das zweite Gerät (102) einen Anruf an ein drittes Gerät initiiert oder einen Anruf vom dritten Gerät empfängt, Folgendes umfasst:
Erkennen, durch das Bluetooth-Headset (200), eines Anrufzustands des zweiten Geräts (102); und
Mischen, durch das Bluetooth-Headset (200), des Hinweistons für einen eingehenden Anruf und des Audios des ersten Anrufs, und Wiedergeben des Hinweistons für einen eingehenden Anruf und des Audios des ersten Anrufs, die gemischt sind, wenn der Anrufzustand des zweiten Geräts (102) ein Zustand für einen eingehenden Anruf ist; oder
Mischen, durch das Bluetooth-Headset (200), des Hinweistons für einen ausgehenden Anruf und des Audios des ersten Anrufs, und Wiedergeben des Hinweistons für einen ausgehenden Anruf und des Audios des ersten Anrufs, die gemischt sind, wenn der Anrufzustand des zweiten Geräts (102) ein Zustand für einen ausgehenden Anruf ist;
wobei das Wiedergeben, durch das Bluetooth-Headset (200), von Audio des zweiten Anrufs vom zweiten Gerät (102), wenn das zweite Gerät (102) einen zweiten Anruf verbindet, Folgendes umfasst:
Trennen, durch das Bluetooth-Headset (200), von einer ersten SCO-Verbindung (Synchronous Connection Oriented) zum ersten Gerät (101);
Aufbauen, durch das Bluetooth-Headset (200), einer zweiten SCO-Verbindung zum zweiten Gerät (102); und
Empfangen, durch das Bluetooth-Headset (200), des Audios des zweiten Anrufs über die zweite SCO-Verbindung und Wiedergeben des Audios des zweiten Anrufs.

2. Verfahren nach Anspruch 1, wobei das Wiedergeben, durch das Bluetooth-Headset (200), von Audio des zweiten Anrufs vom zweiten Gerät (102) und Steuern, durch das Bluetooth-Headset (200), des ersten Geräts (101) zum Halten oder Beenden des ersten Anrufs, wenn das zweite Gerät (102) einen zweiten Anruf verbindet, Folgendes umfasst:
Steuern, durch das Bluetooth-Headset (200), des zweiten Geräts (102) zum Beantworten des zweiten Anrufs, Wiedergeben, durch das Bluetooth-Headset (200), des Audios des zweiten Anrufs vom zweiten Gerät (102) und Steuern, durch das Bluetooth-Headset (200), des ersten Geräts (101) zum Halten des ersten Anrufs, wenn das Bluetooth-Headset (200) eine erste Bedienung empfängt, oder
Steuern, durch das Bluetooth-Headset (200), des zweiten Geräts (102) zum Beantworten des zweiten Anrufs, Wiedergeben, durch das Bluetooth-Headset (200), des Audios des zweiten Anrufs vom zweiten Gerät (102) und Steuern, durch das Bluetooth-Headset (200), des ersten Geräts (101) zum Beenden des ersten Anrufs, wenn das Bluetooth-Headset (200) eine zweite Bedienung empfängt, wobei sich die zweite Bedienung von der ersten Bedienung unterscheidet.

3. Verfahren nach Anspruch 1, wobei nach dem Empfangen, durch das Bluetooth-Headset (200), des Audios des zweiten Anrufs über die zweite SCO-Verbindung das Verfahren ferner Folgendes umfasst:
Trennen, durch das Bluetooth-Headset (200), von der zweiten SCO-Verbindung zum zweiten Gerät (102), wenn das zweite Gerät (102) den zweiten Anruf beendet;
Aufbauen, durch das Bluetooth-Headset (200), der ersten SCO-Verbindung zum ersten Gerät (101); und
Empfangen, durch das Bluetooth-Headset (200), des Audios des ersten Anrufs über die erste SCO-Verbindung und Wiedergeben des Audios des ersten Anrufs.

4. Verfahren nach einem der Ansprüche 1 bis 2, wobei das Wiedergeben, durch das Bluetooth-Headset (200), des Audios des ersten Anrufs vom ersten Gerät (101), wenn das zweite Gerät (102) den zweiten Anruf ablehnt, Folgendes umfasst:
Halten, durch das Bluetooth-Headset (200), einer ersten SCO-Verbindung zum ersten Gerät (101); und
Fortfahren, durch das Bluetooth-Headset (200), mit dem Empfangen des Audios des ersten Anrufs über die erste SCO-Verbindung und Wiedergeben des Audios des ersten Anrufs.

5. Bluetooth-Headset, wobei das Bluetooth-Headset einen Prozessor (201) umfasst und der Prozessor (201) konfiguriert ist, ein Computerprogramm in einem Speicher (203) aufzurufen, um das Verfahren nach einem der Ansprüche 1 bis 4 durchzuführen.

6. Ein computerlesbares Speichermedium, wobei das computerlesbare Speichermedium Anweisungen speichert, und wenn die Anweisungen ausgeführt werden, ein Bluetooth-Headset dazu befähigt wird, das Verfahren nach einem der Ansprüche 1 bis 4 auszuführen.

7. Ein Computerprogrammprodukt, wobei, wenn das Computerprogrammprodukt auf einem Bluetooth-Headset ausgeführt wird, das Bluetooth-Headset dazu befähigt wird, das Verfahren nach einem der Ansprüche 1 bis 4 auszuführen.

## Revendications

1. Procédé d'appel basé sur une oreillette Bluetooth, appliqué à une oreillette Bluetooth (200) prenant en charge des connexions simultanées à une pluralité de dispositifs terminaux (100), dans lequel la pluralité de dispositifs terminaux (100) comprend un premier dispositif (101) et un deuxième dispositif (102), l'oreillette Bluetooth (200) établit une connexion Bluetooth avec chacun du premier dispositif (101) et du deuxième dispositif (102), et le procédé comprend :
la lecture, par l'oreillette Bluetooth (200), de l'audio d'un premier appel provenant du premier dispositif (101) ;
la mise en attente, par l'oreillette Bluetooth (200), de la lecture de l'audio du premier appel, et la lecture, par l'oreillette Bluetooth (200), d'une tonalité d'invite d'appel sortant ou d'une tonalité d'invite d'appel entrant du deuxième dispositif (102), lorsque le deuxième dispositif (102) lance un appel vers un troisième dispositif ou que le deuxième dispositif (102) reçoit un appel provenant du troisième dispositif ; et
la lecture, par l'oreillette Bluetooth (200), de l'audio du deuxième appel provenant du deuxième dispositif (102), et la commande, par l'oreillette Bluetooth (200), du premier dispositif (101) pour mettre en attente ou interrompre le premier appel, lorsque le deuxième dispositif (102) connecte un deuxième appel ; ou
la poursuite, par l'oreillette Bluetooth (200), de la lecture de l'audio du premier appel provenant du premier dispositif (101) lorsque le deuxième dispositif (102) rejette le deuxième appel ;
dans lequel l'oreillette Bluetooth (200) stocke la tonalité d'invite d'appel sortant et la tonalité d'invite d'appel entrant, et la lecture, par l'oreillette Bluetooth (200), de l'audio du premier appel, et la lecture, par l'oreillette Bluetooth (200), d'une tonalité d'invite d'appel sortant ou d'une tonalité d'invite d'appel entrant du deuxième dispositif (102), lorsque le deuxième dispositif (102) lance un appel vers un troisième dispositif ou reçoit un appel provenant du troisième dispositif comprend :
la détection, par l'oreillette Bluetooth (200), d'un état d'appel du deuxième dispositif (102) ; et
le mélange, par l'oreillette Bluetooth (200), de la tonalité d'invite d'appel entrant et de l'audio du premier appel, et la lecture de la tonalité d'invite d'appel entrant et de l'audio du premier appel qui sont mélangés, lorsque l'état d'appel du deuxième dispositif (102) est un état d'appel entrant ; ou
le mélange, par l'oreillette Bluetooth (200), de la tonalité d'invite d'appel sortant et de l'audio du premier appel, et la lecture de la tonalité d'invite d'appel sortant et de l'audio du premier appel qui sont mélangés, lorsque l'état d'appel du deuxième dispositif (102) est un état d'appel sortant ;
dans lequel la lecture, par l'oreillette Bluetooth (200), de l'audio du deuxième appel provenant du deuxième dispositif (102) lorsque le deuxième dispositif (102) connecte un deuxième appel comprend :
la déconnexion, par l'oreillette Bluetooth (200), d'une première liaison orientée connexion synchrone, SCO, avec le premier dispositif (101) ;
l'établissement, par l'oreillette Bluetooth (200), d'une deuxième liaison SCO vers le deuxième dispositif (102) ; et
la réception, par l'oreillette Bluetooth (200), de l'audio du deuxième appel via la deuxième liaison SCO, et la lecture de l'audio du deuxième appel.

2. Procédé selon la revendication 1, dans lequel la lecture, par l'oreillette Bluetooth (200), de l'audio du deuxième appel provenant du deuxième dispositif (102), et la commande, par l'oreillette Bluetooth (200), du premier dispositif (101) pour mettre en attente ou abandonner le premier appel, lorsque le deuxième dispositif (102) connecte un deuxième appel, comprend :
la commande, par l'oreillette Bluetooth (200), du deuxième dispositif (102) pour répondre au deuxième appel, la lecture, par l'oreillette Bluetooth (200), de l'audio du deuxième appel provenant du deuxième dispositif (102), et la commande, par l'oreillette Bluetooth (200), du premier dispositif (101) pour mettre en attente le premier appel, lorsque l'oreillette Bluetooth (200) reçoit une première opération ; ou
la commande, par l'oreillette Bluetooth (200), du deuxième dispositif (102) pour répondre au deuxième appel, la lecture, par l'oreillette Bluetooth (200), de l'audio du deuxième appel provenant du deuxième dispositif (102), et la commande, par l'oreillette Bluetooth (200), du premier dispositif (101) pour abandonner le premier appel, lorsque l'oreillette Bluetooth (200) reçoit une deuxième opération, dans lequel la deuxième opération est différente de la première opération.

3. Procédé selon la revendication 1, dans lequel après la réception, par l'oreillette Bluetooth (200), de l'audio du deuxième appel via la deuxième liaison SCO, le procédé comprend en outre :
la déconnexion, par l'oreillette Bluetooth (200), de la deuxième liaison SCO vers le deuxième dispositif (102) lorsque le deuxième dispositif (102) abandonne le deuxième appel ;
l'établissement, par l'oreillette Bluetooth (200), de la première liaison SCO vers le premier dispositif (101) ; et
la réception, par l'oreillette Bluetooth (200), de l'audio du premier appel via la première liaison SCO, et la lecture de l'audio du premier appel.

4. Procédé selon l'une quelconque des revendications 1 à 2, dans lequel la lecture, par l'oreillette Bluetooth (200), de l'audio du premier appel provenant du premier dispositif (101) lorsque le deuxième dispositif (102) rejette le deuxième appel comprend :
le maintien, par l'oreillette Bluetooth (200), d'une première liaison SCO vers le premier dispositif (101) ; et
la continuation de la réception, par l'oreillette Bluetooth (200), de l'audio du premier appel via la première liaison SCO, et la lecture de l'audio du premier appel.

5. Oreillette Bluetooth, l'oreillette Bluetooth comprenant un processeur (201), et le processeur (201) étant configuré pour invoquer un programme informatique dans une mémoire (203) pour exécuter le procédé selon l'une quelconque des revendications 1 à 4.

6. Support de stockage lisible par ordinateur, dans lequel le support de stockage lisible par ordinateur stocke des instructions, et lorsque les instructions sont exécutées, un casque Bluetooth est activé pour mettre en œuvre le procédé selon l'une quelconque des revendications 1 à 4.

7. Produit de programme informatique, dans lequel lorsque le produit de programme informatique est exécuté sur un casque Bluetooth, le casque Bluetooth est activé pour mettre en œuvre le procédé selon l'une quelconque des revendications 1 à 4.
